(19) **Europäisches Patentamt / European Patent Office / Office européen des brevets**

(11) **EP 1 443 721 B1**

(12) **EUROPEAN PATENT SPECIFICATION**

(45) Date of publication and mention
of the grant of the patent:
**25.03.2009 Bulletin 2009/13**

(51) Int Cl.:
**H04L 12/56** (2006.01)

(21) Application number: **04002060.4**

(22) Date of filing: **30.01.2004**

(54) **Distributed router for dynamically managing forwarding information and method thereof**

Verteilter Router und Verfahren zur dynamischen Verwaltung von Informationsweiterleitung

Routeur réparti pour la gestion dynamique d'information d'acheminement

(84) Designated Contracting States:
**DE FR GB**

(30) Priority: **30.01.2003 KR 2003006435**

(43) Date of publication of application:
**04.08.2004 Bulletin 2004/32**

(73) Proprietor: **SAMSUNG ELECTRONICS CO., LTD.**
**Suwon-city,**
**Gyeonggi-do (KR)**

(72) Inventors:
• **Kim, Byoung-Chul,**
**Samsung Electronics Co.,Ltd.**
**Suwon-si**
**Gyeonggi-do (KR)**

• **Choe, Byoung-Gu,**
**Samsung Electronics Co.,Ltd.**
**Suwon-si**
**Gyeonggi-do (KR)**

(74) Representative: **Lang, Johannes**
**Bardehle Pagenberg Dost Altenburg Geissler,**
**Postfach 86 06 20**
**81633 München (DE)**

(56) References cited:
**EP-A- 0 969 630       EP-A2- 1 063 827**
**US-A- 6 078 963       US-B1- 6 212 184**

**Description**

CLAIM OF PRIORITY

This application claims priority under 35 U.S.C. §119 to our application entitled *DISTRIBUTED ROUTER FOR DYNAMICALLY MANAGING FORWARDING INFORMATION AND METHOD THEREOF* earlier filed in the Korean Intellectual Property Office on the 30th day of January 2003 and there assigned Serial No. 2003-6435.

**BACKGROUND OF THE INVENTION**

Field of the Invention

The present invention relates generally to a method of managing forwarding information in a distributed router (*i.e.*, in a router constructed with a distributed architecture), and more particularly, to a method of sharing in real time routing information collected at each router node from among all the router nodes within a distributed router and of dynamically managing forwarding information by aggregation based on the routing information.

Description of the Related Art

Along with the development of ultra high-speed, large-capacity networks, routers have evolved from existing centralized architecture to new distributed architecture.

In a centralized router, a central processor implements routing protocols and manages routing information collected by the routing protocols. For example, the central processor computes routing tables and distributes to line cards the routing tables that it computes. Hence, the line cards perform packet forwarding based on the routing tables computed by the central processor.

On the other hand, a distributed router allocates the tasks of the central processor among a plurality of processors, and consequently processes a large volume of data in comparison to a centralized router. The distributed router has different processors; for example, a first processor that manages the routing protocols, a second processor that calculates the routing tables, and a third processor that manages packet forwarding. Each of the processors is dedicated to its assigned function, thereby endeavoring to improve routing performance.

Routing nodes have their own routing tables to support their sub-networks and their own processors to process routing paths. From the perspective of users, the routing nodes are seen as one router, even though these routing nodes each globally manage the routing tables of the other routing nodes within the distributed architecture of the router.

The input/output processor for each routing node is divided into a system processor area with the routing protocols, a management processor, and a routing table, and a network processor area with a forwarding table. The system processor for each of the routing nodes performs a set of operations by collecting the routing information, managing the forwarding table obtained by calculating a routing path, and sharing the routing table with the other input/output processors, whereas the network processor forwards data between network equipment connected in the local area in accordance with the forwarding table. Hence, the distributed router must process a large volume of data rapidly.

Each of the routing nodes must share its forwarding table with the other routing nodes in order to process a large volume of data rapidly in the distributed router. By way of example, traditionally, each routing node exchanges the forwarding tables with the other routing nodes so that any one of the routing nodes can globally manage the forwarding tables of all of the routing nodes. Consequently, each routing node of a distributed architecture router must be equipped with a large-capacity memory in order to store the forwarding tables; this creates an unnecessary overhead for the main operational utility of routers, namely packet forwarding.

Document EP 0 696 630 discloses a network information sharing unit provided in a route calculation unit of each router in a clustered router. The network information sharing unit receives an update notification of network information collected by routing protocol units and sends this update information to all other routers in the clustered router as a network information notification packet. The network information units in the receiving router notifies the routing protocol units of the contents of the received updated information. The routing protocol unit updates the network information thereof based on the notified contents.

Document US 6,078,963 discloses a network router having a plurality of intelligent router ports. Each intelligent router port may have its own routing and/or forwarding engines.

Documents US 6,212,184 B I discloses methods and devices for layer four switching in a router as might be found in the Internet. A grid of tries, which are binary branching trees, is constructed from the set of routing filters. The grid includes a dest-trie and a number of source tries. Each filter is stored in exactly one trie. The tries are traversed to find the lowest cost routing. Switch pointers are used to improve the search cost. Another method is disclosed which is based on hashing, in which searches for lowest cost matching filters take place in bit length tuple space. Rectangle searching with precomputation and markers are used to eliminate a whole column of tuple space when a match occurs, and to eliminate the rest of a row when no match is found.

SUMMARY OF THE INVENTION

An object of the present invention is to substantially solve at least the above problems and/or disadvantages and to provide at least the advantages below. Accordingly, an object of the present invention is to provide a distributed router and process for preventing an increase in inter-node traffic caused by packet forwarding attributed to each routing node's sharing of routing information with the other routing nodes within a distributed architecture router.

Another object of the present invention is to provide a distributed architecture router and a process in which each routing node shares in real time its collected routing information with the other routing nodes within a distributed architecture router.

Still another object of the present invention is to provide a router and a process within a distributed architecture router to manage forwarding information in a manner that reduces the size of the forwarding table require at each routing node in a distributed architecture router.

Yet another object of the present invention is to provide a router and a process to manage forwarding information for each routing node in a distributed router in which the routing node shares in real time its collected routing information with the other routing nodes.

Still yet another object of the present invention is to provide a router and a process to manage forwarding information by using a binary aggregation tree in each routing node, with the aggregation tree being built with nodes corresponding to routing information and delegation nodes that aggregate the routing information, in a distributed router.

A further object of the present invention is to provide a router and a process to efficiently manage forwarding information by variably setting the aggregation level of delegation nodes.

The problem of the invention is solved by the method of managing forwarding information as described in claim 1, 6 and 8. Further embodiments are defined in the dependent claims.

In accordance with the present invention, in a distributed architecture router and process for managing forwarding information in the distributed router, all routing nodes share a routing table that includes routing information collected by each of those routing nodes and an aggregation tree created on the basis of the routing table. When new routing information is inserted into the routing table, a position in the aggregation tree is detected at which an insertion node corresponding to the new routing information is to be inserted into the aggregation tree. The aggregation tree is searched to locate an ancestor node of the insertion node at, or below, a predetermined maximum aggregation level. Given the presence of the ancestor node, the forwarding table is left un-updated with information about the insertion node when both forwarding information corresponding to the ancestor node is in the forwarding table with the ancestor node and the insertion node and the ancestor node were generated from the same source area. In the absence of the ancestor node, the aggregation level is reset to a level less than or equal to the maximum aggregation level, and a delegation node representative of the insertion node is inserted at the reset aggregation level. The source area of the inserted routing information is determined. If the source area of the routing information is a virtual area, forwarding information corresponding to the delegation node is inserted in the forwarding table. If the source area of the routing information is a local area, forwarding information corresponding to the insertion node is inserted into the forwarding table.

In accordance with another embodiment of the present invention, in a distributed router and a process to manage forwarding information in the distributed router in which all routing nodes share a routing table including routing information collected by each of the routing nodes and an aggregation tree created on the basis of the routing table. When routing information is deleted from the routing table, a deletion node corresponding to the deleted routing information is located in the aggregation tree. If forwarding information corresponding to the deletion node is in the forwarding table, the aggregation tree is searched to locate a descendant node of the deletion node at or below a predetermined maximum aggregation level. When a descendant node exists for the deletion node, the descendant node is set as a new source node of a delegation node. When no descendant nodes exist for the deletion node, forwarding information corresponding to the deletion node is deleted from the forwarding table.

BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a schematic block diagram that illustrates the configuration of an exemplary distributed router;

FIG. 2                    is a schematic block diagram illustrating a typical process structure incorporated into a distributed router;

FIG. 3                    is a schematic block diagram illustrating a process structure in a distributed router constructed as an embodiment of the present invention;

FIG. 4A                   illustrates the format of the management data about each node in an aggregation tree created to manage entries of forwarding information in an embodiment of the present invention;

FIG. 4B                   illustrates an aggregation tree created to manage entries of forwarding information in an embodiment of the present invention;

FIG. 4C                   is a two coordinate graph illustrating a prefix distribution as a function of the length of a prefix;

FIG. 5                    is a flowchart illustrating a method for managing added routing information according to the principles of the present invention;

FIGs. 6A, 6B and 6C       are flowcharts illustrating a method for adding entries of forwarding information according to the principles of the present invention;

FIG. 7                    is a flowchart illustrating a method for managing deleted routing information according to the principles of the present invention;

FIGS. 8A to 8G            collectively illustrate an algorithm for dynamically managing entries of forwarding information according to the principles of the present invention;

FIGS. 9A and 9B           are diagrams illustrating a method for managing added entries of forwarding information in an embodiment of the present invention;

FIGS. 10A and 10B         are diagrams illustrating a method of managing deletion of forwarding information in an embodiment of the present invention; and

FIGS. 11A                 is a table and

FIGS. 11B to 11D          are two coordinate graphs that illustrate test results which verify the effects of managing dynamic forwarding information according to the principles of the present invention.

DETAILED DESCRIPTION OF THE PREFERRED EMBODIMENTS

Exemplars of current practice and preferred embodiments of the present invention will be described herein below with reference to the accompanying drawings. In the following description, well-known functions or constructions are not described in detail since they would obscure the invention in unnecessary detail.

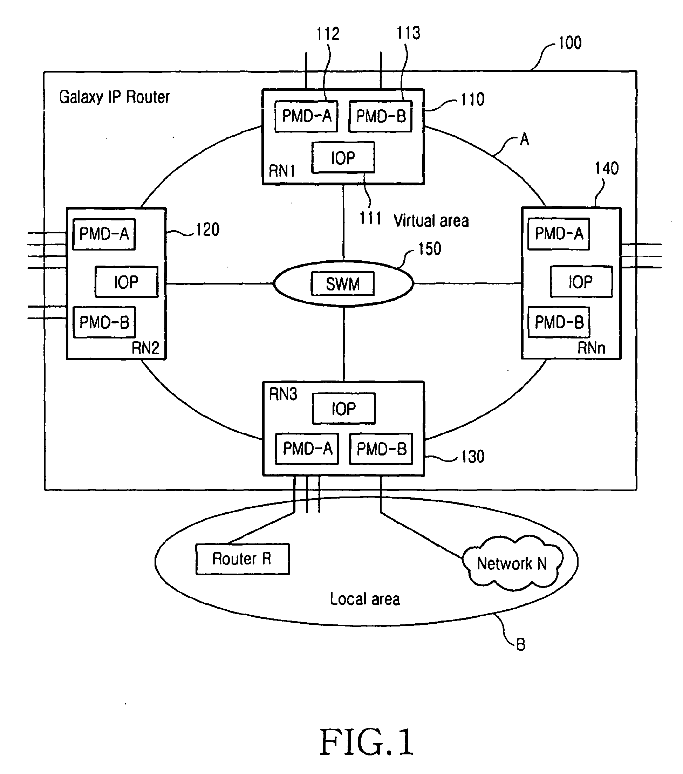

FIG. 1 is a schematic block diagram of an exemplary router 100 having a distributed architecture. The distributed router illustrated in FIG. 1 may be a Galaxy Internet protocol (*i.e.*, an IP router).

Referring to FIG. 1, the distributed architecture of router 100 provides a plurality of routing nodes 110, 120, 130 and 140 connected to each other through a switching module (SWM) 150. Each of the routing nodes 110, 120, 130, 140 is provided with an input/output processor (IOP) 111. Each input/output processor 111 is designed to receive packets from two physical medium devices (PMDs: PMD-1 and PMD-2), respectively 112 and 113.

These routing nodes RNs 110, 120, 130, 140 each has its own routing tables to support their sub-networks and each has its own processors to process routing paths. Routing nodes RNs 110 , 120, 130, 140 each run the routing protocols and perform forwarding, independently. From the perspective of users, routing nodes RNs 110-140 are seen as one router. Thus, routing nodes RNs 110, 120, 130, 140 each manage the routing tables of the other routing nodes 110, 120, 130, 140, globally. A physical sub-network connected to any one of the routing nodes RNs 110, 120, 130, 140 is called a local area B, and a network formed by the connections between the routing nodes RNs 110, 120, 130, 140 via switching module SWM 150 is called a virtual area A.

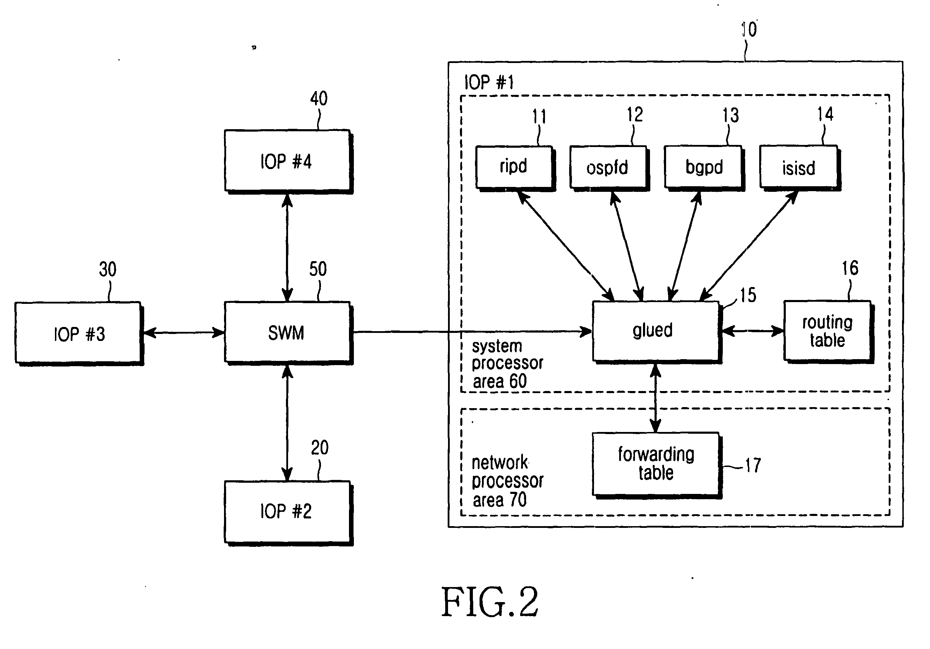

FIG. 2 is a schematic block diagram illustrating a typical process structure for a distributed router 100, especially illustrating the process performed by input/output processors IOP 10, 20, 30, 40 in each routing node RN and the connections between switching module SWM 50 and IOPs 10, 20, 30, 40 (IOP#1, IOP#2, IOP#3 and IOP#4) in the case where distributed router 100 is equipped with four routing nodes RNs.

Continuing to refer to FIG. 2, IOP#1 includes a plurality of routing protocols, such as ripd 11, ospfd 12, bgpd 13 and isisd 14, an IOP management processor, Galaxy Loosely Unified Environment Daemon (i.e., GLUED) 15 that serves as an input and output management processor, a routing table 16, and a forwarding table 17.

Routing protocols 11, 12, 13, 14 collect routing information based on their unique collection criteria. Routing table 16 stores the collected routing information, and forwarding table 17 stores forwarding information obtained from calculating the stored routing information.

Management processor 15 of IOP#1 is responsible for storing the collected routing information in routing table 16 and the forwarding information in forwarding table 17, and managing routing table 16 and forwarding table 17. Management processor 15 also advertises the collected routing information stored by routing table 16 to the other input/ output processors IOPs 20, 30 and 40 via switching module SWM 50.

IOP#1 is divided into a system processor area 60 with the routing protocols 11, 12, 13, 14, IOP management processor 15, and routing table 16, and a network processor area 70 with forwarding table 17. System processor area 60 performs a set of operations for collecting the routing information, managing the forwarding table assembled by calculating a routing path, and sharing the routing table with the other input/output processors IOPs 20, 30 and 40, whereas network processor area 70 performs forwarding work between network equipment connected in the local area according to the information stored in forwarding table 17. Thus, a distributed router, that is, a router constructed with a distributed architecture, can theoretically process a large volume of data more rapidly.

As illustrated in FIGS. 1 and 2, each routing node RN 10, 20, 30, 40 must share its forwarding table with the other routing nodes RNs 10, 20 30, 40 in order to process a large volume of data rapidly in distributed router 100. For this purpose, traditionally, each of the routing nodes RN 10, 20, 30, 40 exchanges the forwarding tables with the other routing nodes RNs via switching module SWM 50 so that each of the routing nodes can globally manage the forwarding tables of all of routing nodes 10, 20, 30, 40. On the assumption that a distributed router 100 includes ten routing nodes and that each of the routing nodes has ten thousand forwarding entries, each of the routing nodes must manage one hundred thousand forwarding entries. This concomitantly necessitates a large-capacity memory:

$$\#\text{Memory capacity} = 10{,}000 \text{ forwarding entries per routing node} \bullet 10 \text{ routing nodes} \ldots\ldots\ldots (1)$$

in order to store the forwarding tables containing in excess of one hundred thousand forwarding entries; we have found the need for memory capacity to create an unnecessarily large overhead for packet forwarding transmission.

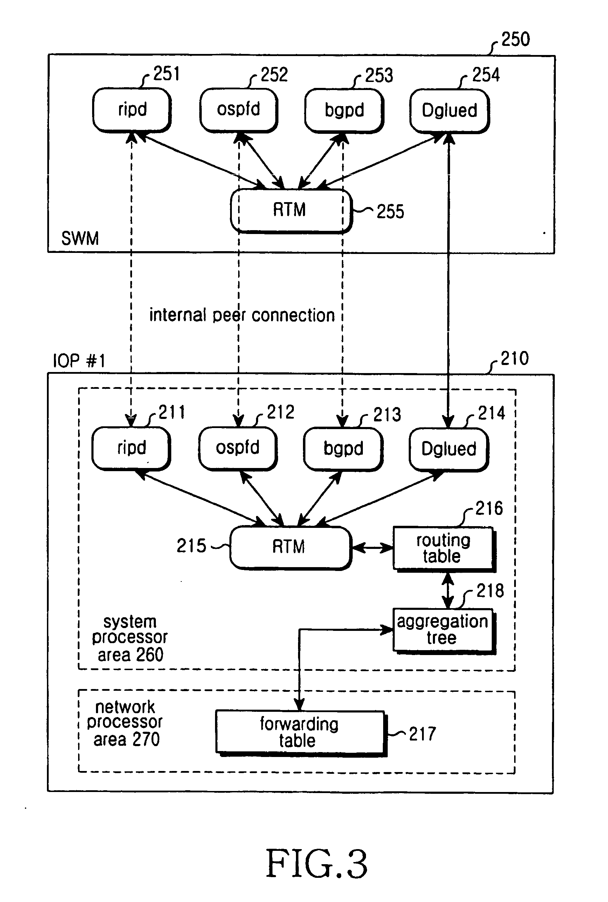

FIG. 3 illustrates a process structure in a distributed router constructed as an embodiment of the present invention. In general, the distributed router typically has a plurality of input and output processors, referred to as IOPs such as IOP #1. The IOPs exchange information with one another via a single switch module, SWM 250. This architecture is simplified to illustrate only one IOP 210 (IOP#1) and a SWM 250 in the representation provided by FIG. 3, for conciseness, although other routing nodes 220 (IOP#2), 230 (IOP#3) and 240 (IOP#3) are contemplated.

Referring again to FIG. 3, system processor area 260 is a virtual private network (*i.e.*, a "VPN"). The process structure of the distributed router constructed as one of the several possible embodiments of the present invention may include an aggregation tree 218 in the system processor area 260 of IOP#1. Aggregation tree 218 is built with nodes corresponding to forwarding information and routing information managed by each input and output processor IOP in the distributed router and delegation nodes that aggregate the forwarding and routing information, as disclosed in Korea Patent Application No. 2002-0075701 entitled *DYNAMIC MANAGEMENT METHOD FOR FORWARDING INFORMATION IN ROUTER HAVING DISTRIBUTED ARCHITECTURE,* and filed by the same applicant of this application and subsequently filed in the United States Patent & Trademark Office on the 1st day of December 2003 and there assigned Serial No. 10/724,085, which application is incorporated herein.

U.S. Serial No. 10/724,085 describes a method for reducing the sizes of a forwarding tables managed by each routing node of a router constructed with a distributed architecture; a technique to reduce internal traffic by reducing transmission of control packets that are transmitted in order to update a forwarding table in a router constructed with a distributed architecture; and a process for dynamically managing forwarding information in response to an addition or a deletion of routing information in a router having a distributed architecture, by aggregating or disaggregating forwarding information.

As described by U.S. Serial No. 10/724,085 forwarding information may be managed in a router constructed with a distributed architecture including a plurality of routing nodes, by forming an aggregation tree corresponding to each routing node, with the aggregation tree including nodes corresponding to forwarding information for each of the routing nodes and virtual nodes for aggregating forwarding information for each of the routing nodes; varying the aggregation tree when forwarding information is added to each of the routing nodes; identifying the creation area of forwarding information added to each of the routing nodes; making an analysis of the aggregation tree, advertising forwarding information to other routing nodes based on the analysis, and storing forwarding information in a local forwarding table of a corresponding routing node when the forwarding information is created in a local area of the corresponding routing node; and making an analysis of the aggregation tree, and storing forwarding information in the local forwarding table of the corresponding routing node based on the analysis when forwarding information is not created in the local area of the corresponding routing node.

U.S. Serial No. 10/724,085 teaches that forwarding information may also be managed in a router constructed with a distributed architecture including a plurality of routing nodes, by forming an aggregation tree corresponding to each routing node, with the aggregation tree including nodes corresponding to forwarding information for each of the routing nodes and virtual nodes for aggregating forwarding information of each of the routing nodes; making an analysis of the aggregation tree of each of the routing nodes in response to a deletion of forwarding information in each routing node and identifying the creation area of deleted forwarding information; advertising the deletion of forwarding information to other routing nodes only when the deleted forwarding information is advertised to other routing nodes by analyzing the aggregation tree when deleted forwarding information is created in a local area of the corresponding routing node, deleting the node corresponding to deleted forwarding information from the aggregation tree, and deleting forwarding information from a local forwarding table of the corresponding routing node; and deleting the node corresponding to forwarding information from the aggregation tree when deleted forwarding information is not created in the local area of the corresponding routing node.

Switch module SWM 250 is provided with routing protocols ripd 251, ospfd 252, bgpd 253 and Dglued 254. Internal peer connections are made between these routing protocols 251 to 254 and their counterparts, ripd 211, ospfd 212, bgpd 213 and glued 214 in input/output processor IOP # 1.

Accordingly, switch module SWM 250 shares in real time routing information collected by the respective routing protocols of each input/output processor IOP with IOP#1 and provides the routing information to the IOPs of the other routing nodes via the internal peer connections. Consequently, in a distributed router constructed according to the principles of the present invention, the internal peer connections between the routing protocols make it possible to share the same routing information among all input and output processors IOPs.

In the embodiment illustrated by FIG. 3, routing table manager modules RTMs 215 and 255, respectively included in IOP#1 and switch module SWM 250 globally manage routing information obtained from the routing protocols 211, 212, 213, 214, and the routing protocols 251, 252, 253, 254, and manage the priority levels of the routing information.

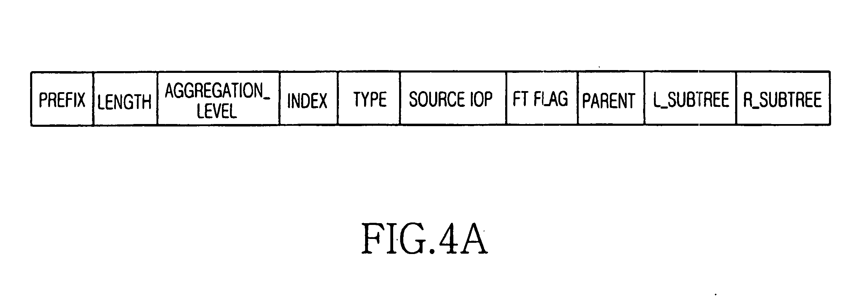

FIG. 4A illustrates the format of the management data about each node in an aggregation tree created to manage forwarding information according to an embodiment of the present invention. Referring to FIG. 4A, the management data of each node includes a PREFIX that is an address to which forwarding information is to be forwarded, a LENGTH that states the length of the PREFIX, an Aggregation_Level that indicates the aggregation level of the node, an INDEX indicating whether the node is a delegation node or is a source node to which the delegation node belongs (e.g., a node that has created the delegation node), a TYPE that indicates the type of the forwarding information, a SOURCE IOP that indicates the routing node RN that generated the forwarding information, a FT FLAG that indicates whether the forwarding information has been stored in a local forwarding table, and general link information in the binary tree, for example, PARENT is an indicator that identifies a parent node, L_SUBTREE is a data field indicating a left subtree, and R_SUBTREE is a data field indicating a right subtree.

The aggregation level is initially set to a default level (i.e., a maximum level) by an operator. It is variable to at or below the default level, depending on the router implementation. That is, the aggregation level can be reset dynamically according to the network condition so that a delegation node for aggregating routing information can be created at or below the dynamic level.

INDEX indicates, in the case of a delegation node, the source node that created the delegation node. INDEX provides the information by which the source node can be searched for from the delegation node. For example, if a delegation node is derived from the right child node under the left child node of the delegation node, INDEX for the delegation node is "01" since generally, a left child node is "0" and a right child node is "1".

TYPE indicates the type of the routing protocol (e.g., BGP, SDPF, RIP, etc.) by which the forwarding information is generated in an input and output processor IOP 210. For a delegation node, TYPE is set to indicate delegation such that the forwarding information for the delegation node is distinguished from actual forwarding information. The delegation type is lower in priority level than any other type (i.e., BGF, SDPF, RIP, etc.). Since a delegation node provides virtual forwarding information, actual forwarding information generated by the routing protocols is of higher priority.

To set the type of forwarding information, a routing node determines the source area in which the forwarding information was generated. If it was generated from a local area, the routing node RN sets the type of the forwarding information according to the type of the processor that created the forwarding information. On the other hand, if the forwarding information was generated from a virtual area, the routing node RN sets the type of the forwarding information in a manner that indicates that the forwarding information is virtual. To do so, the routing node RN analyzes the PREFIX of the forwarding information. If the PREFIX is a private Internet Protocol (i.e., an IP) address, the routing node RN considers that the forwarding information is from the virtual area. Otherwise, the routing node RN considers that the

6

forwarding information is from the local area.

A private IP address refers to an address that is available in a local network, identifying a node within the local network. Therefore, a private IP address is unavailable from a source that is outside the local network. A distributed router generally assigns a private IP address to each routing node in order to identify the routing nodes. Therefore, in the practice of the present invention, the source area of the forwarding information is identified by use of a private IP address for each of the routing nodes.

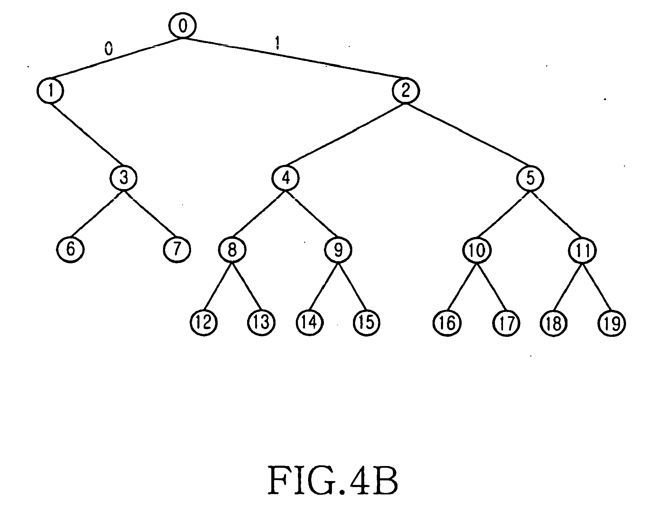

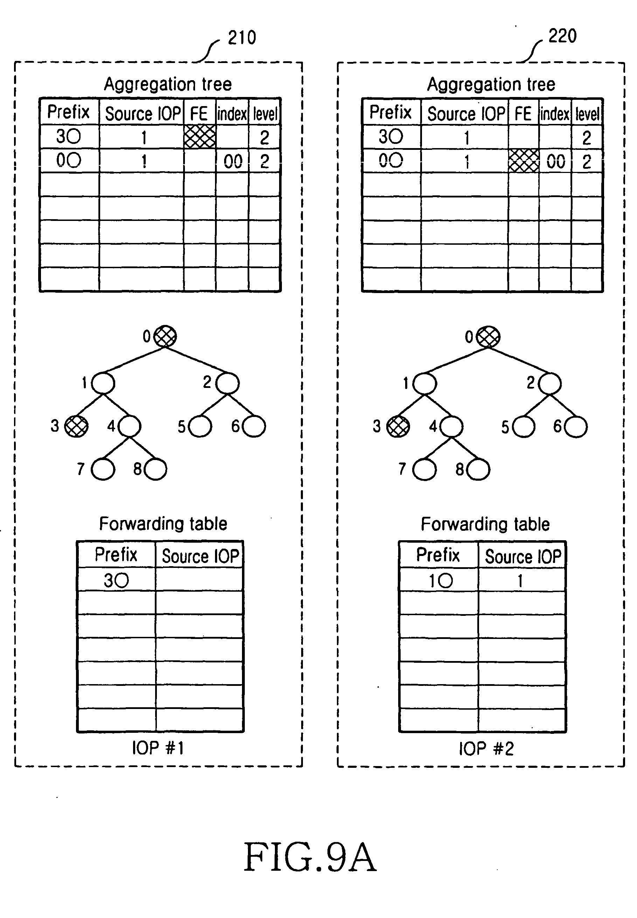

FIG. 4B illustrates an example of an aggregation tree created to manage forwarding information in the practice of one embodiment of the present invention. The aggregation tree is a binary tree. The updates of the aggregation tree due to insertion and deletion of routing information will be described in detail later, with reference to FIGS. 9A through 10B.

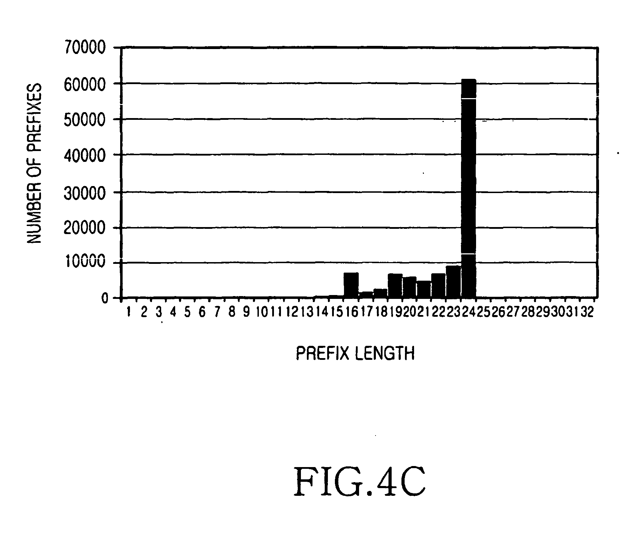

Turning now to FIG. 4C, routing entries in a real border gateway protocol (*i.e.,* a "BGP") core routing table, which is used to verify the performance of the present invention, are concentrated at prefix length of between 15 to 24 units, as shown in FIG. 4C. The analysis of this prefix length distribution reveals that the algorithm overhead involved in dynamic aggregation and retrieval of forwarding information can be reduced by limiting the aggregation level of a delegation node to the default level.

In accordance with the present invention, when the Galaxy IP router illustrated in FIG. 1 is extended to a multi-rack configuration, the routing table manager (*i.e.,* RTM) 255 of switching module SWM 250 in each rack manages the routing tables of all input/output processors (*i.e.,* IOPs) under its management; this enables forwarding information aggregation between IOPs to be easily expanded to the level of forwarding information aggregation between racks.

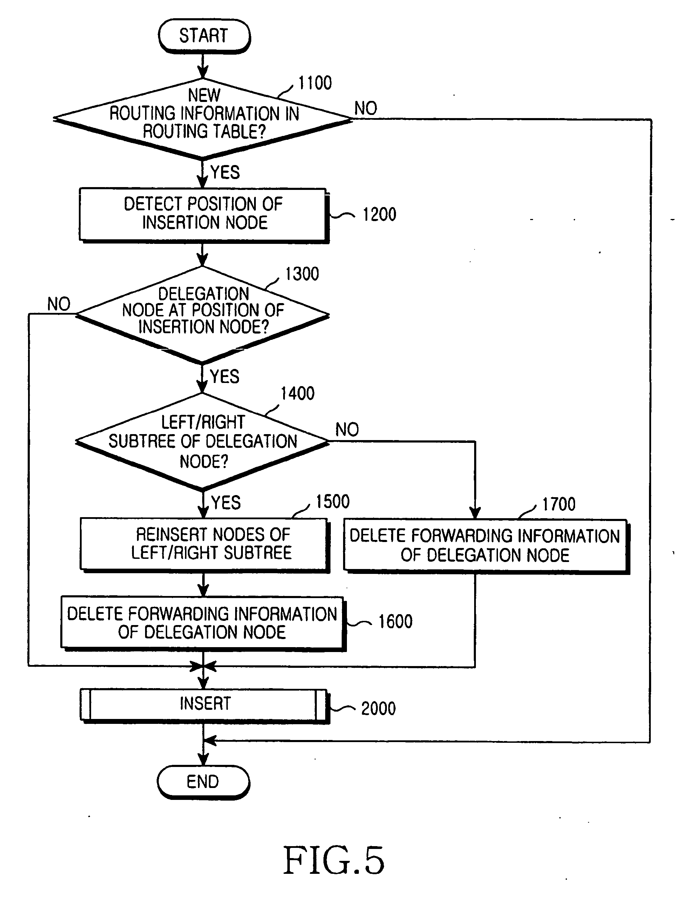

FIG. 5 is a flowchart illustrating a method for managing added routing information in an embodiment of the present invention.

Referring to FIG. 5, if during step 1100, new routing information is generated and added to the routing table in a routing node RN in the distributed router configured as illustrated in FIG. 3, during step 1200 routing node RN detects the position of an insertion node corresponding to the added routing information (hereinafter, the node corresponding to the added routing information will be referred to as an insertion node). Specifically, a binary search of the aggregation tree from a root node is repeated until a node is detected that has a prefix of the same length as that of the added routing information. When the position of the insertion node is detected, then during step 1300 routing node RN determines whether a delegation node exists in the position of the insertion node. If step 1300 determines that no delegation node exists at the position of the insertion node, that is, if step 1300 finds that the position is empty then during step 2000 the insertion node corresponding to the added routing information is inserted at the position.

If during step 1300, the presence of a delegation node is detected at the position of the insertion node, the forwarding information corresponding to the delegation node is deleted in step 1600 to instead permit an insertion of the insertion node in step 2000.

For this purpose, during step 1400 routing node RN determines whether there is a left/right subtree for the delegation node. If the delegation node does not have a left/right subtree, in step 1700 the routing node RN deletes the forwarding information corresponding to the delegation node from its forwarding table. If during step 1400 the delegation node is found to have a left/right subtree, the nodes at the left/right subtree must be reinserted in step 1500 before the forwarding information corresponding to the delegation node is deleted in step 1600, since the delegation node is a representative of the nodes at the left/right subtree. After an insertion of the nodes at the left/right subtree in step 1500, the whole insertion procedure of FIG. 5 is performed again. This is typically termed a recursive function. That is, in the presence of the left/right subtree, a reinsertion of a left/right subtree is performed in step 1500 and then in step 1600 the forwarding information corresponding to the delegation node is deleted from the forwarding table.

As described above, when the delegation node exists at the position of the insertion node, the forwarding information corresponding to the delegation node is replaced by the insertion node in steps 1400 through 1700.

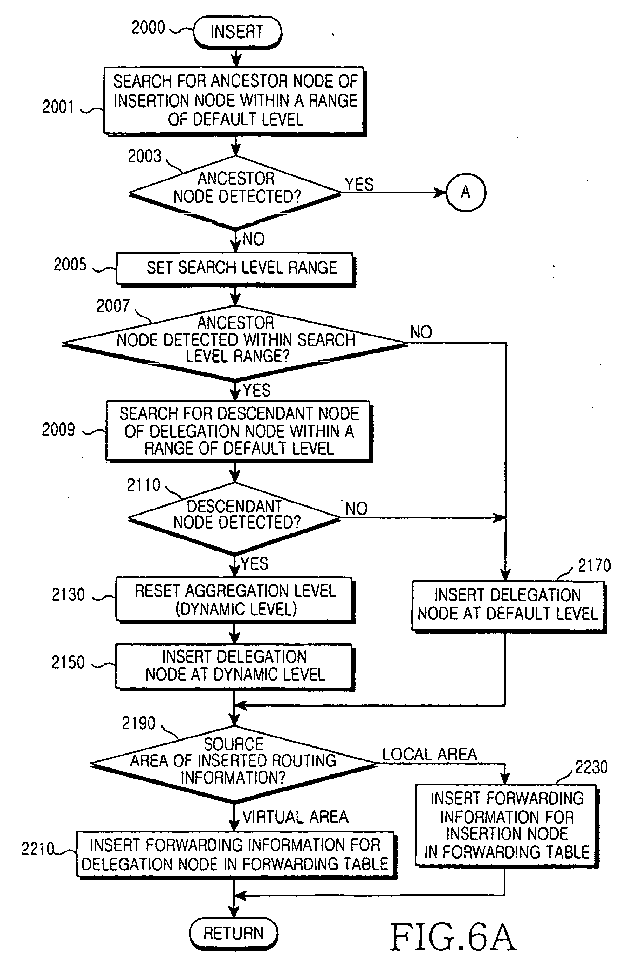

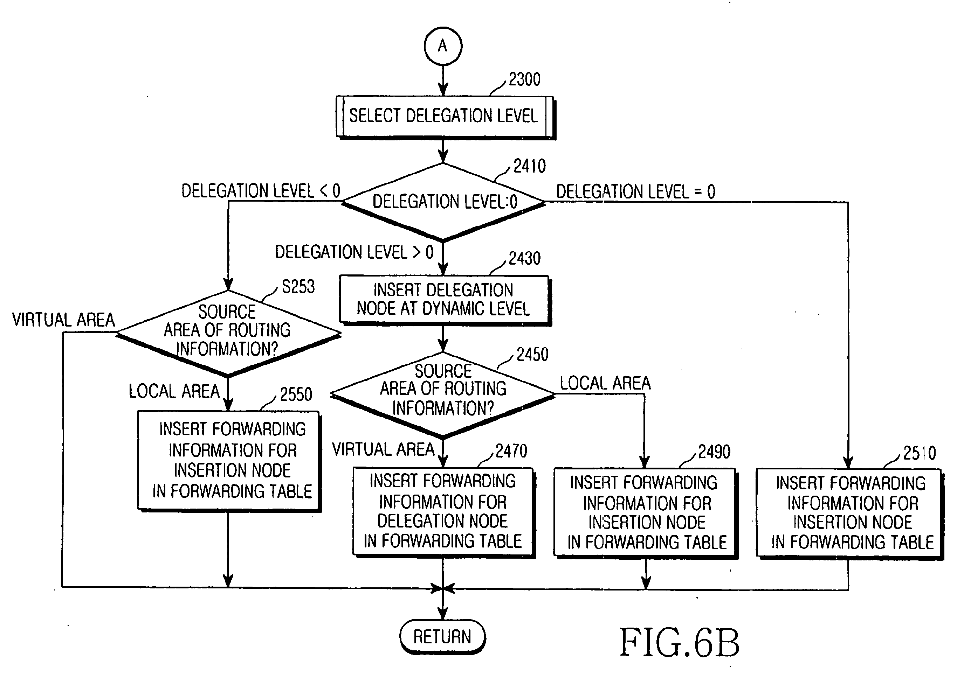

FIGS. 6A, 6B an 6C illustrate insertion step 2000 in more detail.

Referring to FIG. 6A, before routing node RN inserts the forwarding information corresponding to the insertion node, during step 2001 the routing node searches for an ancestor node of the insertion node at or below the default level of the insertion node in order to detect a position at which to insert a delegation node representative of the insertion node.

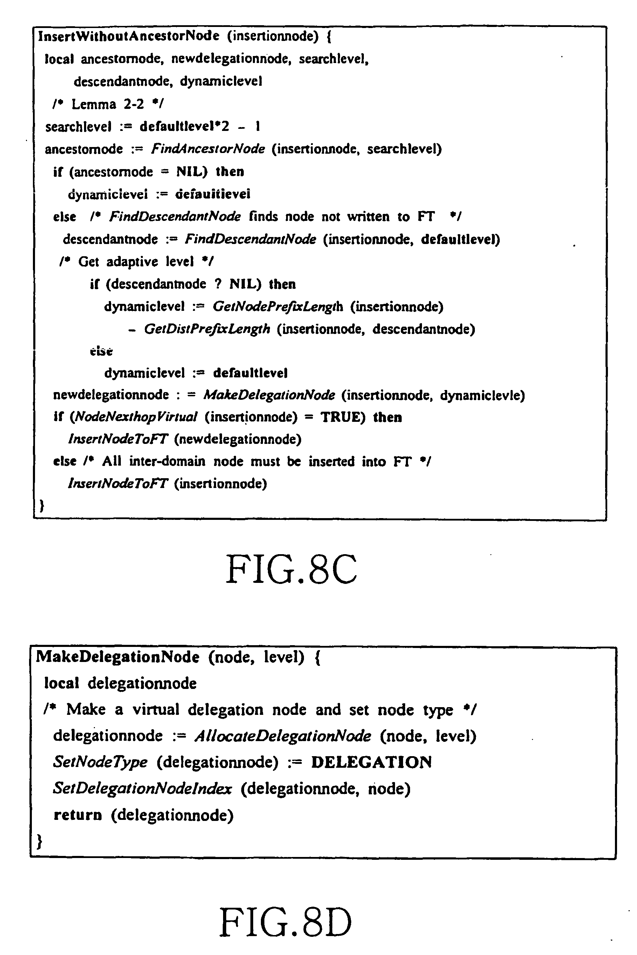

If step 2003 fails to detect an ancestor node, a default search level is set in step 2005, by Equation (2) as illustrated by the algorithm set forth in Fig. 8C:

$$\text{Search Level}(searchlevel) = (defaultlevel \cdot 2) - 1 \quad\text{......................................................... (2)}$$

In step 2007, routing node RN determines whether an ancestor node of the insertion node exists at or below the search level established in step 2007 in order to reduce the occurrence of errors when inserting a delegation node for the insertion node.

If step 2007 establishes that there is no ancestor node of the insertion node at or below the search level established in step 2005, then in step 2170, the delegation node representative of the insertion node for the new routing information being inserted into the routing table, is inserted at the default level. If an ancestor node of the insertion node is detected during step 2007 at or below the search level, in step 2009 a search is made for descendant nodes of the ancestor node within the default level, that is at or below the default for the search level established in step 2005 in order to determine the presence or absence of descendant nodes for which the delegation node is the representative.

In the absence of any descendant node at or below the default search level, the delegation node for the insertion node is inserted at the default search level in step 2170. In the presence of a descendant node however, the aggregation level is reset as a dynamic level in step 2130 and in step 2150 the delegation node is inserted at the dynamic level of the aggregation level established by step 2130. The aggregation level is related to the tree level; by way of example, with reference to Fig. 4B, the aggregation level between node #9 and node #2 is two. Preferably, the dynamic level is set as shown in Fig. 8C, by Equation (3) as:

$$\text{dynamiclevel} = GetNodePrefixLength \text{ (insertion node)}$$

$$- GetDistPrefixLength \text{ (insertionnode, descendant node)} \dots\dots\dots\dots\dots (3)$$

where:

GetNodePrefixLength is a function for computing the prefix length of the insertion node, and

GetDistPrefixLength is a function for computing a position when the prefix lengths of the insertion node and the descendant node differ.

For example, if the prefix length of the insertion node is 18 and the prefix length of the descendant node is different at 19, the dynamic level is one, (that is, 1 = 19 - 18) according to Equation (3)). Thus, the delegation node is generated at a level higher than the insertion node by one level.

After the insertion of the delegation node in steps 2005 through 2170, in step 2190 the routing node RN determines the source area of the routing information that is being inserted in order to determine whether to store the added routing information in the forwarding table or not. If step 2190 determines that the routing information is from the virtual area, the forwarding information corresponding to the delegation node for the routing information is inserted in the forwarding table in step 2210. If step 2190 determines that the routing information is from the local area however, the forwarding information corresponding to the insertion node for the routing information is inserted in the forwarding table in step 2230.

FIG. 6B illustrates an operation performed after steps 2001, 2003 determine that there is an ancestor node for the insertion node of the insertion node.

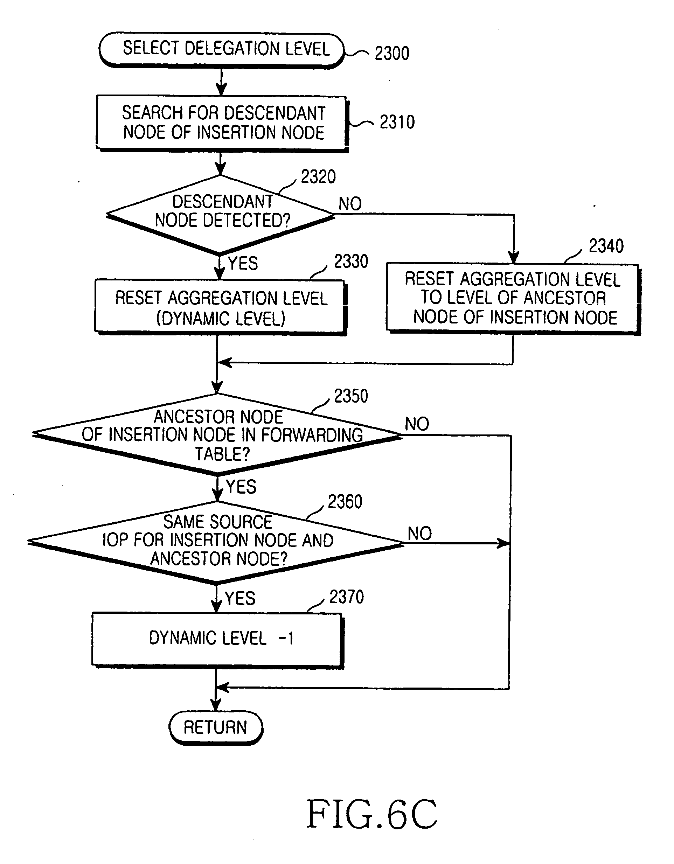

Referring to FIGS. 6A, 6B and 6C collectively, upon detection during step 2003 of an ancestor node of the insertion node, a determination is made by the SelectDelegationLevel algorithm illustrated by Fig. 6C in step 2300 to establish a dynamic level at which to insert the delegation node. The SelectDelegationLevel algorithm sets the delegation level to -1 through steps 2350, 2360, 2370 to reset the dynamic level in order to omit a forwarding table update, if the forwarding table has already been updated with the ancestor node of the insertion node and both the insertion node and the ancestor node were generated from the same source IOP.

The dynamic level is compared with zero in step 2410. A dynamic level of zero implies that a delegation node representative for the insertion node can not be inserted into the aggregation tree, and the forwarding information corresponding to the insertion node is directly inserted in the forwarding table in step 2510.

If the dynamic level is determined in step 2410 to be less than zero, the source area of the routing information is determined again in step 2530 and the forwarding table is updated in step 2550 with the forwarding information corresponding to the insertion node only if the source area of the routing information is determined in step 2530 to be the local area. If the routing information is determined by step 2530 to be from the virtual area, the routing node RN jumps to the next step, omitting the forwarding table update. In this case, the aggregation process exerts an effect that advantageously tends to reduce the memory overhead that would be otherwise incurred by the forwarding tables.

If the dynamic level is determined in step 2410 to be greater than zero, the routing node RN inserts the delegation node at the dynamic level in step 2430. The routing node RN then determines the source area of the routing information in step 2450. If the source area is found in step 2450 to be the local area in step 2470, the routing node RN inserts the forwarding information corresponding to the delegation node into the forwarding table. If the source area is found during the local area however, the routing node RN inserts the forwarding information corresponding to the insertion node in the forwarding table in step 2490.

FIG. 6C illustrates the algorithm for step 2300 in more detail. To select the dynamic level at which to insert the delegation node, the aggregation level is reset in dependence upon whether step 2310 detects the presence or absence of a descendant node of the insertion node. In step 2320, a search is made for a descendant node of the insertion node. If step 2320 determines that a descendant node of the insertion node was detected in step 2310, the dynamic level, that is, the aggregation level is reset in step 2330 by Equation (3) using the prefix length of the insertion node and the position where the insertion node and the descendant node differ in prefix length. On the other hand, in the absence of the detection of a descendant node in step 2320, the delegation level for the ancestor node of the insertion node is set in step 2340 at the aggregation level of the delegation node.

Meanwhile, if during step 2350 the ancestor node of the insertion node is determined to exist in the aggregation tree if in step 2360, and if the insertion node and the ancestor node are also determined to have been generated from the same source IOP, then in step 2370 the dynamic level is set to -1 in order to omit the forwarding table updating step.

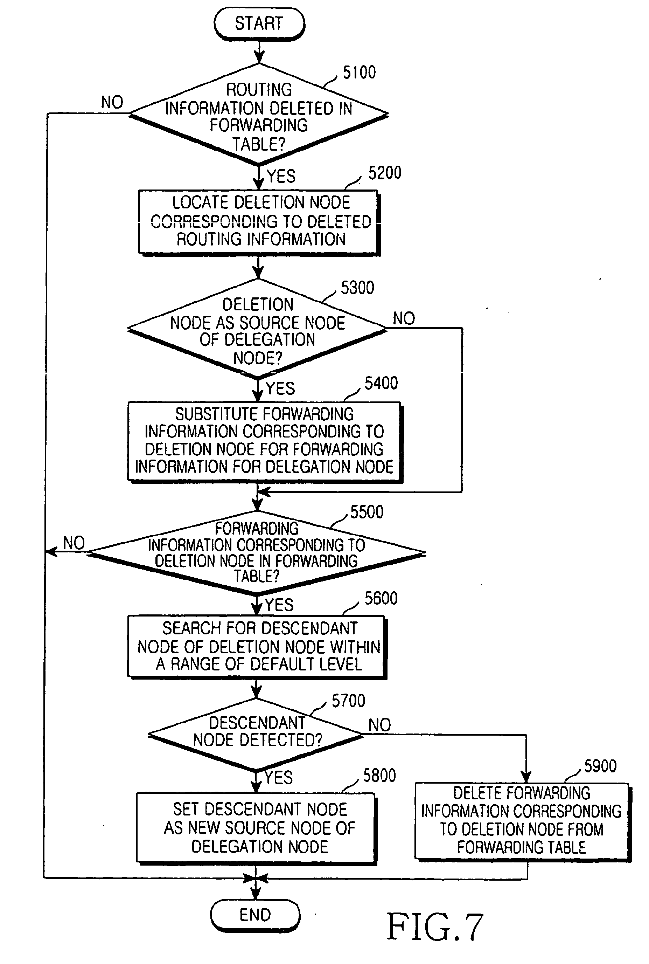

FIG. 7 is a flowchart illustrating a method for managing deleted routing information according to an embodiment of the present invention.

Referring to FIG. 7, in step 5100, when routing information is deleted from the routing table of an routing node RN, the routing table manager RNB locates a node corresponding to the deleted routing information (hereinafter, referred to as a deletion node) in step 5200. This step is similar to the search for the position of the insertion node performed when making an insertion of routing information. That is, in step 5200 a binary search in the aggregation tree from a root node is repeated until a node is located that has a prefix length equal to that of the deleted routing information.

Upon detection of the deletion node, in step 5300 the routing node RN determines whether, or not, the deletion node is the source node of a delegation node. If the deletion node is the source node, the forwarding information corresponding to the delegation node is changed to that of the deletion node in step 5400 in order to effect the deletion of the deletion node by deleting the delegation node.

In step 5500, the routing node RN determines whether the forwarding information corresponding to the deletion node is in the forwarding table. If it is not, the deletion procedure ends. On the other hand, if the forwarding information corresponding to the deletion node is present in the forwarding table, a descendant node for the deletion node is searched for in step 5600 at or below the default level. If a descendant node is detected during step 5600, the descendant node is set as a new source node of the delegation node in step 5800, which might otherwise lead to the loss of a delegation node for the other descendant nodes when the delegation node represents a plurality of descendant nodes and one of those descendant nodes which is the source node of the delegation node is deleted.

In the absence of the detection during steps 5600, 5700 a descendant node of the deletion node at or below the default level in step 5900, the routing node RN deletes the forwarding information corresponding to deletion node from the forwarding table.

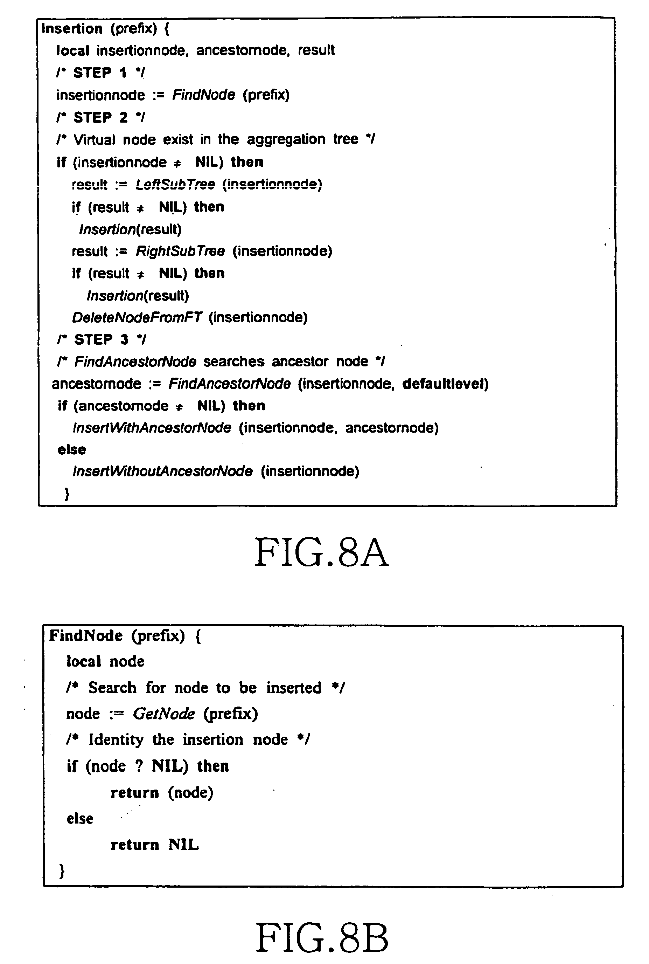

FIGS. 8A to 8G illustrate an algorithm for dynamically managing forwarding information according to an embodiment of the present invention.

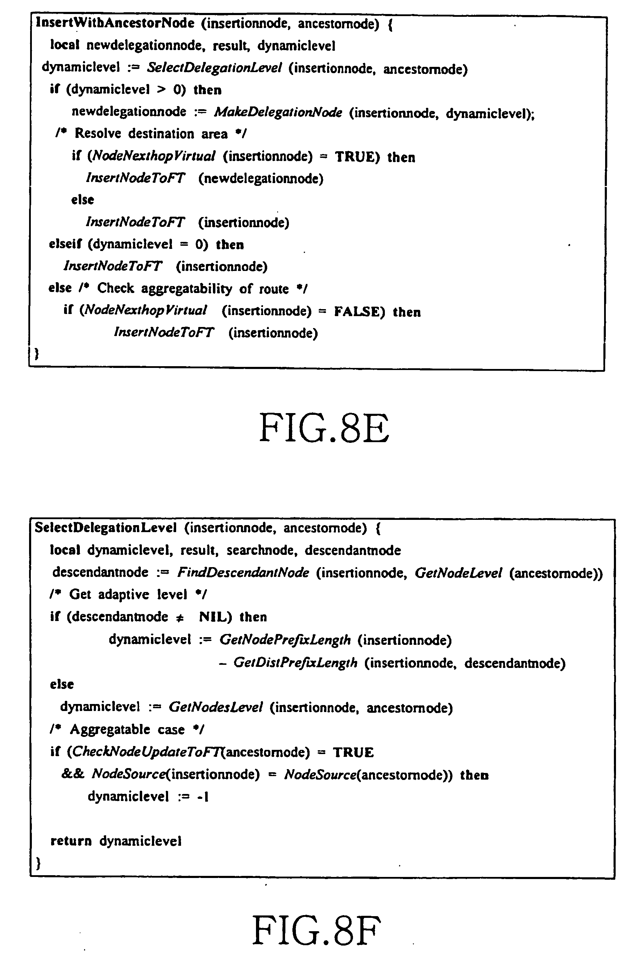

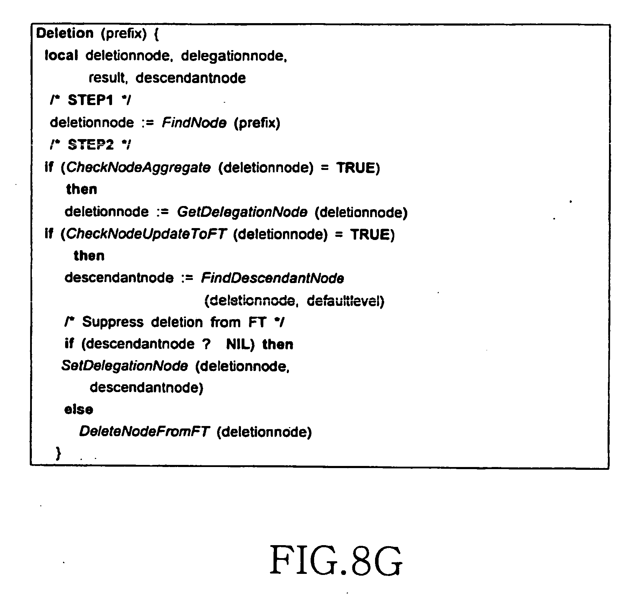

FIG. 8A illustrates a pseudo code representation of the steps 1100, 1200, 1300, 1400, 1500, 1600 and 1700 illustrated in FIG. 5. FIG. 8B illustrates a pseudo code representation of step 1200 illustrated in FIG. 5 and step 5200 illustrated in FIG. 7. FIG. 8C illustrates a pseudo code representation of steps 2001 through 2210 and 2230 illustrated in FIG. 6A. FIG. 8D illustrates a pseudo code representation of steps 2150 and 2170 illustrated in FIG. 6A. FIG. 8E illustrates a pseudo code representation of steps 2300, 2410, 2430, 2450, 2470, 2490, 2510, 2530 and 2550 illustrated in FIG. 6B. FIG. 8F illustrates a pseudo code representation of steps 2300 through 2370 illustrated in FIG. 6C. FIG. 8G illustrates a pseudo code representation of steps 5100 through 5900 illustrated in FIG. 7. Since those steps in FIGS. 8A to 8G have been described in detail above, their description is not repeated here. The algorithm presented in the pseudo code shown by FIGS. 8A to 8G is a merely exemplary application. Thus, many modifications may be made to the algorithm, in the practice of the principles of this invention.

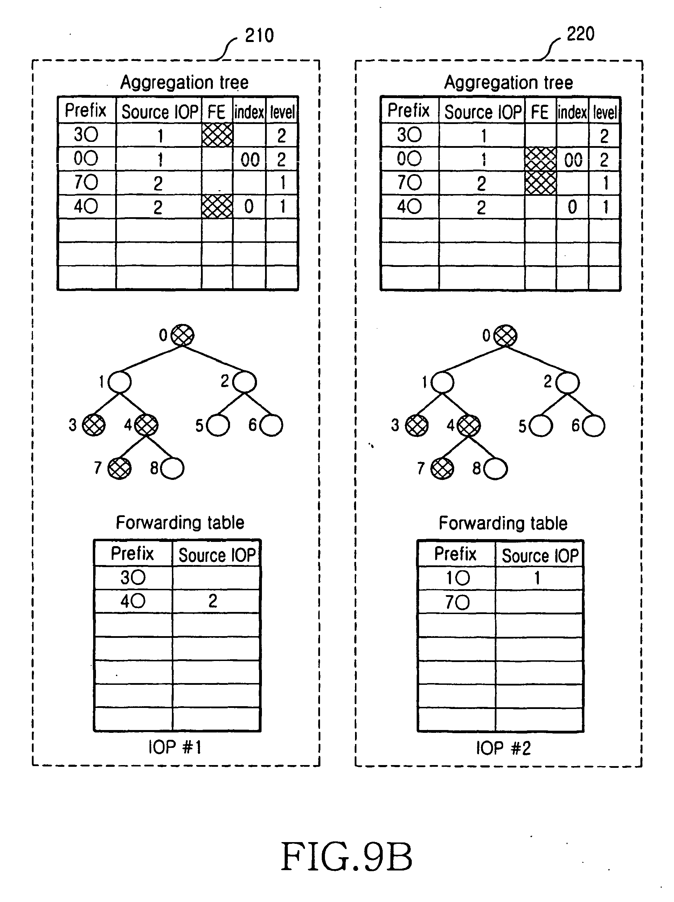

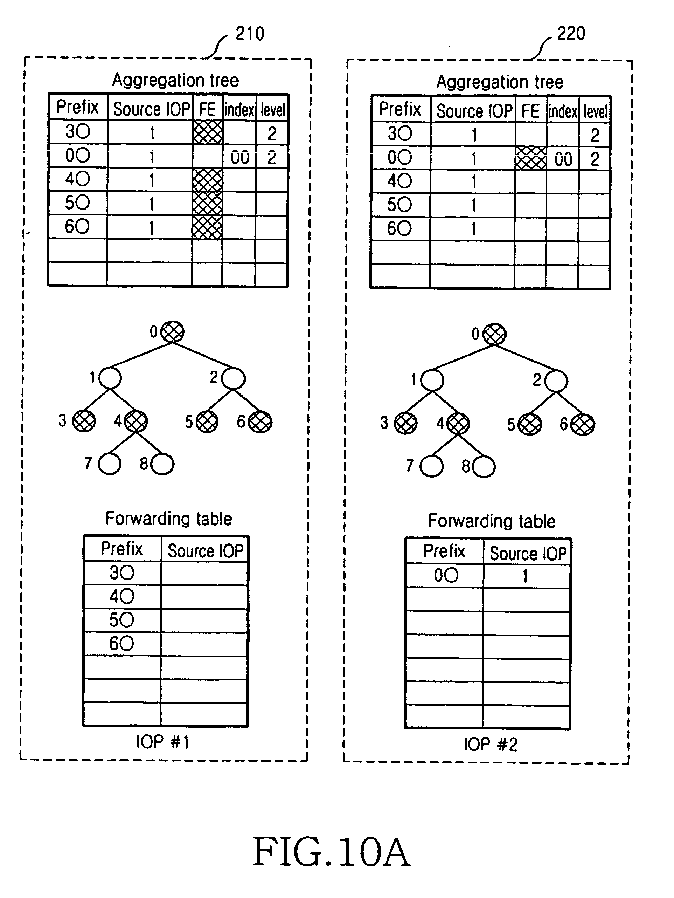

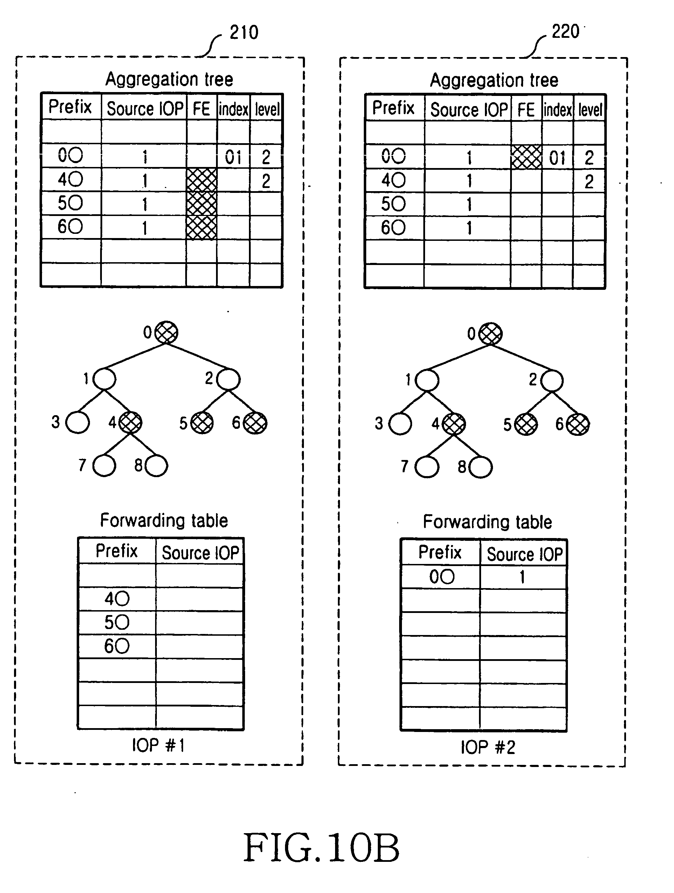

FIGS. 9A to 10B are diagrams illustratively showing the forwarding information managing techniques, and especially the method of managing added and deleted forwarding information under a default level of two, in accordance with the principles of the present invention. Specifically, FIGS. 9A and 9B illustratively show the management of added forwarding information, and FIGs. 10A and 10B illustratively show the management of deleted forwarding information.

In aggregation trees illustrated in FIGS. 9A to 10B, PREFIX provides an address to which the forwarding information corresponding to a node is to be forwarded, by identifying a destination node. SOURCE IOP indicates the source IOP of the routing node that created the insertion node, and FE indicates whether the forwarding information has been stored in a forwarding table. FE, if marked, indicates the presence of the forwarding information in the forwarding table. INDEX indicates the source node of the node to be forwarded if the node to be forwarded is a delegation node. LEVEL is the aggregation level of the node to be forwarded.

Referring to FIG. 9A, when new routing information with a forwarding Prefix of three is produced in an IOP 210 (IOP#1) with forwarding information stored in the Forwarding Table 217, a controller of IOP#1 inserts the routing information (i.e., node 3) in binary aggregation tree 218 of IOP#1. Since the aggregation level of the insertion node is two, a delegation node with a prefix of zero is added two levels higher than the insertion node with a prefix of three. Since the source node of the delegation node with a prefix of zero is the insertion node 3 (that is, the insertion node with a Prefix of "3"), INDEX for the delegation node is "00". Information about insertion node 3 is stored in a forwarding table because both the insertion node 3 and the delegation node with a prefix of zero have the same source, namely routing node 210 IOP #1.

Meanwhile, the other routing nodes share the routing information of IOP #1 (*e.g.*, that is, the other routing nodes IOP#2, IOP#3, IOP#4, share aggregation tree 218 of routing node IOP#1) in the nature of the distributed router of the present invention so that each node shares its routing information stored in its routing table with the other nodes. In the illustrated case of FIG. 9A, an IOP 220 (IOP#2) shares the routing information stored in routing table 216 of IOP#1. The same will be applied to cases described hereinbelow.

Referring again to FIG. 9A, although IOP#2 has the same aggregation tree as that of IOP#1, it has different forwarding table contents. That is, IOP#1 stores information about insertion node 3 in its forwarding table 217 in accordance with step 2230 because insertion node 3 is new routing information that was produced in the local area serviced by IOP#1, whereas IOP#2 stores information about delegation node 0 in accordance with step 2210 because delegation node 0 is new routing information was produced in the virtual area shared by IOP#1 of routing node 210 and IOP#2 of routing node 220.

FIG. 9B illustrates a case where routing information corresponding to with a prefix of seven is produced in the local area of IOP#2, with the delegation node 0 already stored in the forwarding table.

A controller of IOP#2 detects the position of insertion node 7 and searches in accordance with step 2007 for an ancestor node for insertion node 7 according to the default aggregation level of "2" established by step 2005. The controller of IOP#2 then detects a node 1 as the ancestor node of insertion node 7. Node 1 is an ancestor node through which the insertion node 3 of IOP#1 is detected. Therefore, a delegation node for node 7 is inserted at node 4 which serves as the delegation node of insertion node 7 in accordance with step 2170, and not at ancestor node 1. As described above, the aggregation level is variable and the aggregation level, when reset in step 2130, is called a dynamic level in the present invention.

As illustrated in FIG. 9B, both insertion node 7 and ancestor node 4 are added to the aggregation tree 218 of IOP#1, and the forwarding table of IOP#1 is updated with the delegation node 4 of the node 7 because the source area of node 4 and node 7 were created by the virtual area shared by routing nodes 210, 220 (*i.e.,* IOP#1, IOP#2).

Meanwhile, the controller of IOP#2 updates its forwarding table with information about insertion node 7 because node 7 is from the local area serviced by routing node 220, that is, by IOP #2.

A description will be made now of deletion of routing information according to the present invention with reference to FIGS. 10A and 10B.

Referring to FIG. 10A, a delegation node 0 is representative of nodes 3, 4, 5 and 6 that were generated in the local area of IOP#1. If the source node of node 0 is node 3, information about nodes 3, 4, 5 and 6 is stored in the forwarding table of routing node 210, IOP#1, while only information about the node 0 is stored in the forwarding table of routing node 220, IOP#2.

FIG. 10B illustrates deletion of node 3, which is the source node of delegation node 0, from the aggregation trees of routing trees 210, 220 illustrated in FIG. 10A.

In the case where the source node of a delegation node is deleted, the forwarding information corresponding to the deleted source node, that is, the forwarding information corresponding to the deletion node is deleted from the forwarding table, and the source node of the delegation node is changed, without any change in a virtual area in the present invention.

As illustrated in FIG. 10B, if the node 3 is the source node of delegation node 0, and node 3 is deleted, the controller of IOP#1 changes the source node of delegation node 0 to node 4. Meanwhile, the controller of routing node 220, IOP#2 does not need to perform any particular operation on the forwarding table of routing node 220, because only information about delegation node 0 is stored in the forwarding table of routing node 220.

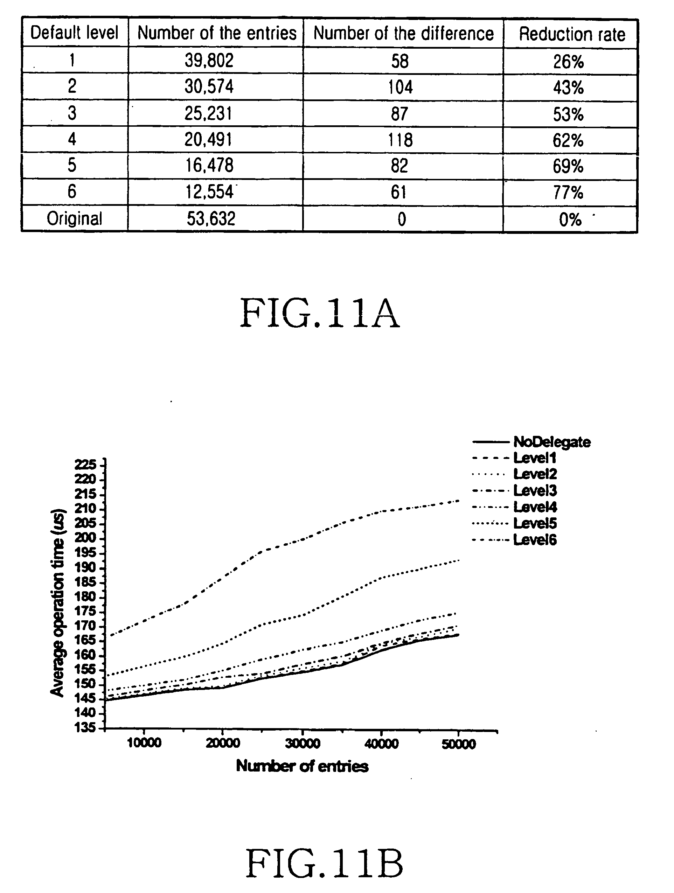

FIGS. 11A to 11D illustrate test results that verify the effects of the dynamic forwarding infonnation management according to the embodiment of the present invention.

The test results were achieved from a test in which 53,000 routing entries were inserted and a predetermined proportion of the routing entries were flapped under the conditions of a Galaxy system constructed with one switching module SWM and two routing node IOPs and routing table entries in a core border gateway protocol router (*i.e.*, a "BGP" router) available from a site http://www.telstra.net/ops/bgptable.html or http://bgp.potaro.net/.

FIG. 11A illustrates the result of a test performed to determine whether the sequence of inserted forwarding entries affects the effects of the present invention. Sample entries arranged in an ascending order are inserted while the order of the sample entries is randomly changed ten times under six defaults levels. Referring to FIG. 13A, the number of the forwarding entries is varied between 60 to 110. Accordingly, it is noted from the above test result that the aggregation effect of the present invention is rarely affected by the insertion order of the forwarding entries.

FIG. 11B is a graph illustrating overhead measurements under six default levels. From FIGS. 11A and 11B, it is concluded that the present invention is most effective at or below a default level of 3, considering router performance and overhead.

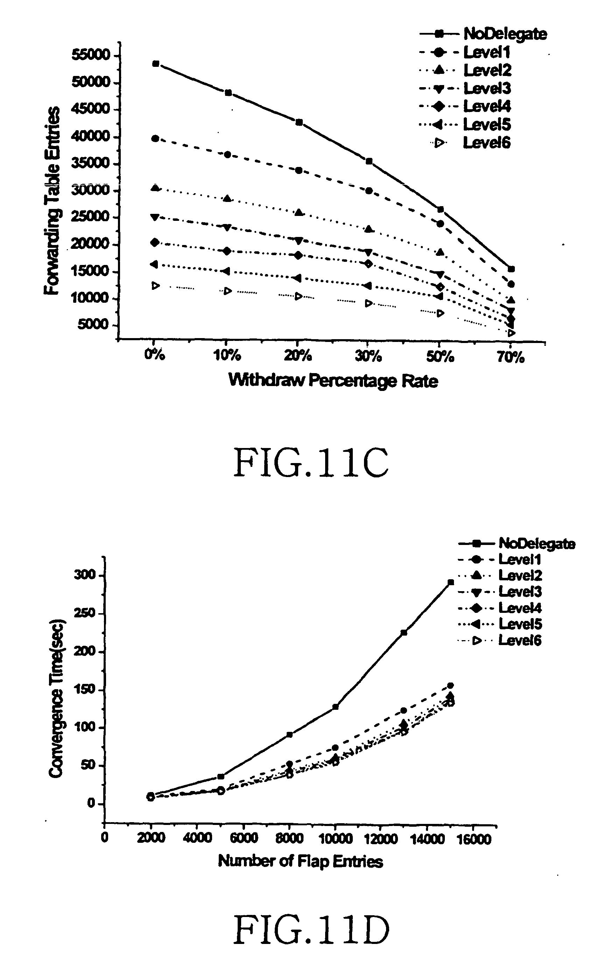

FIG. 11C is a graph illustrating the numbers of forwarding entries remaining in a forwarding table when between 0% to 70% of 53,000 core BGP routing entries are withdrawn. Referring to FIG. 11C, about 26% to 77% of the forwarding entries are reduced when the core BGP entries are simply inserted with a 0% deletion.

FIG. 11D is a graph illustrating the performance of an actual Internet environment measured by use of an Agilent Router Tester. The Agilent Router Tester generally measures the performance of a router under a dynamic routing environment in which a network topology or network reachability continuously changes. The figure illustrates a convergence time as a function of the number of flap entries. The convergence time refers to time required for the router to reflect routing information changes in a forwarding table. This "BGP4 flap convergence time" test measures a traffic redirect convergence time defined as time required to replace a primary router with a new router when the primary router is dropped due to changes in the network topology or network reachability. The test was performed using three routing nodes RNs. Two of the three routing nodes RNs advertise the reachability of the same network behind the routing nodes RNs while the other routing node RN generates data traffic in the advertised network. From the convergence time measurements illustrated in FIG. 11D, the convergence time is reduced when only information about the source node of a delegation node is changed to minimize the amendment of the forwarding table in deleting the actual source node of the delegation node.

In accordance with the present invention as described above, each routing node RN shares its collected routing information in real time with the other routing nodes RNs and manages forwarding information dynamically based on the routing information in a distributed router, thereby obviating the need for packet forwarding to share the routing information between the routing nodes RNs. The routing information is selectively updated in forwarding tables. Thus, a forwarding table for each routing node RN is efficiently managed. Furthermore, the size of the forwarding table in each routing node RN can be reduced since the forwarding information of each routing node RN is managed in the form of a binary aggregation tree and the aggregation level of a delegation node that aggregates node information corresponding to routing information in the aggregation tree is variably set.

While the invention has been shown and described with reference to certain preferred embodiments thereof, it will be understood by those skilled in the art that various changes in form and details may be made therein without departing from the scope of the invention as defined by the appended claims.

## Claims

1. A method of managing forwarding information, comprising the steps of:

   (1) when new routing information is inserted into a routing table (216) in a distributed router (100) in which all routing nodes (210, 220, 230, 240) share a forwarding information made according to an aggregation tree (218) based on the routing table (216), detecting a position at which an insertion node corresponding to the new routing information is to be inserted into the aggregation tree (218);
   (2) determining presence and absence of an ancestor node of the insertion node at or below a predetermined maximum aggregation level;
   (3) leaving a forwarding table (217) un-updated with information about the insertion node in a presence of the ancestor node, when forwarding information is in the forwarding table (217) and the insertion node and the ancestor node have been generated from a common source area;
   (4) in an absence of the ancestor node, resetting the aggregation level to a reset aggregation level not greater than the maximum aggregation level, and inserting a delegation node representative of the insertion node at the reset aggregation level; and
   (5) making an insertion of forwarding information by determining the source area of the inserted routing information, inserting forwarding information corresponding to the delegation node in the forwarding table (217) when the source area of the routing information is a virtual area, and inserting forwarding information corresponding to the insertion node in the forwarding table (217) when the source area of the routing information is a local area.

2. The method of claim 1, comprised of, after making said insertion of forwarding information when a delegation node is found to exist at the position of the insertion node while detecting a position at which an insertion node corresponding to the new routing information is to be inserted into the aggregation tree (218), deleting from the forwarding table (217) forwarding information corresponding to the delegation node.

3. The method of claim 1, comprised of:

after making said insertion of forwarding information when a delegation node is found to exist at the position of the insertion node while detecting a position at which an insertion node corresponding to the new routing information is to be inserted into the aggregation tree (218), and when a left/right subtree of the delegation node exists,

reinserting nodes of the left/right subtree, and

deleting forwarding information corresponding to the delegation node from the forwarding table (217).

4. The method of claim 1, comprising the steps of:

when the ancestor node of the insertion node is found to exist at or below the maximum aggregation level while determining said presence and absence of the ancestor node, searching for a descendant node of the insertion node;

when a descendant node of the insertion node is found to exist, resetting the aggregation level according to a difference between the prefixes of forwarding information corresponding to the insertion node and the descendant node, and when no descendant nodes of the insertion node are found to exist, resetting the aggregation level according to the aggregation level of the ancestor node of the insertion node;

inserting the forwarding information corresponding to the insertion node in the forwarding table (217) when the reset aggregation level is zero;

inserting the delegation node representative of the insertion node in the forwarding table (217) when the reset aggregation level is greater than zero; and

determining the source area of the inserted routing information, inserting the forwarding information corresponding to the delegation node in the forwarding table (217) when the source area is a virtual area, and inserting the forwarding information corresponding to the insertion node in the forwarding table (217) when the source area is a local area.

5. The method of claim 1, comprised of performing said steps of resetting the aggregation level to a reset aggregation level not greater than the maximum aggregation level in an absence of the ancestor node, and inserting a delegation node representative of the insertion node at the reset aggregation level, by:

setting a search level range to determine whether the ancestor node of the insertion node exists within the search level range;

when the ancestor node of the insertion node exists within the search level range, determining whether a descendant node of the delegation node representative of the insertion node exists at the maximum aggregation level range;

resetting the aggregation level according to a difference between the prefixes of the insertion node and the descendant node of the delegation node when the descendant node of the delegation node exists at the maximum aggregation level range; and

inserting the delegation node of the insertion node at the reset aggregation level.

6. A method of managing forwarding information comprising the steps of:

when routing information is deleted from the routing table (216), detecting a deletion node corresponding to the deleted routing information in an aggregation tree (218);

when forwarding information corresponding to the deletion node is in a forwarding table (217), searching for a descendant node of the deletion node at a predetermined maximum aggregation level range; and

when a descendant node exists for the deletion node at an aggregation level not greater than a predetermined maximum aggregation level, changing the descendant node as a new source node of a delegation node, and when no descendant nodes exist for the deletion node at an aggregation level not greater than a predetermined maximum aggregation level, deleting forwarding information corresponding to the deletion node from the forwarding table (217).

7. The method of claim 6, comprising the step of, when the deletion node is a source node that created a delegation node, changing forwarding information corresponding to the deletion node by forwarding information corresponding to the delegation node.

8. A distributed architecture router, comprising:

a switching module (250) accommodating a plurality of routing protocols (251, 252, 253, 254) while managing forwarding information within the distributed architecture router; and

a plurality of routing nodes (210, 220, 230, 240) each disposed to service networks within corresponding source areas comprised of local areas, said plurality of routing nodes (210, 220, 230, 240) being connected via said switching module (250) to form a source area comprising a virtual area and share in real time collected routing information assembled by a routing table (216) and an aggregation tree (218) derived from said routing table (216),

wherein each routing node (210, 220, 230, 240) is disposed to respond to insertion of new routing information into said routing table (216), by being disposed to identify in said aggregation tree (218) a position for addition of an insertion node corresponding to said new routing information;

being disposed to make a search of said aggregation tree (218) within a maximum aggregation level to identify an ancestor node of said insertion node;

being disposed to forgo updating of said forwarding table (217) with forwarding information corresponding to said insertion node when said insertion node and said ancestor node were generated the same said source area and said search identifies said ancestor node;

being disposed to reset said maximum aggregation level to a reset aggregation level not less than said maximum aggregation level when said search fails to identify said ancestor node and being disposed to add a delegation node representative of said insertion node at said reset aggregation level;

being disposed to make an identification of said source area of said new routing information;

being disposed to insert said forwarding information corresponding to said delegation node when said identification establishes that said source area of said new routing information is a virtual area; and

being disposed to insert said forwarding information corresponding to said insertion node when said identification establishes that said source area of said new routing information is a local area.

**Patentansprüche**

1. Verfahren zur Verwaltung von Weiterleitungsinformation, aufweisend die Schritte:

   (1) wenn neue Leitweginformation in eine Leitwegtabelle (216) in einem verteilten Router (100) eingefügt wird, in welchem alle Leitwegknoten (210, 220, 230, 240) eine Weiterleitungsinformation gemeinsam benutzen, die gemäß eines Aggregationsbaumes (218) basierend auf der Leitwegtabelle (216) erzeugt ist, Detektieren einer Position, an welcher ein Einfügeknoten korrespondierend zu der neuen Leitweginformation in den Aggregationsbaum (218) einzufügen ist;

   (2) Bestimmen einer Anwesenheit oder Abwesenheit eines Vorgängerknotens des Einfügeknotens auf oder unter einem vorbestimmten maximalen Aggregationsniveau;

   (3) Belassen einer Weiterleitungstabelle (217) ohne Aktualisieren mit Information über den Einfügeknoten in einer Anwesenheit des Vorgängerknotens, wenn Weiterleitungsinformation in der Weiterleitungstabelle (217) vorhanden ist und der Einfügeknoten und der Vorgängerknoten aus einem gemeinsamen Ursprungsbereich erzeugt worden sind;

   (4) in einer Abwesenheit des Vorgängerknotens, Zurücksetzen des Aggregationsniveaus auf ein zurückgesetztes Aggregationsniveau, das nicht größer als das maximale Aggregationsniveau ist, und Einfügen eines Stellvertreterknotens stellvertretend für den Einfügeknoten auf dem zurückgesetzten Aggregationsniveau; und

   (5) Ausführen eines Einfügens von Weiterleitungsinformation durch Bestimmen des Ursprungsbereichs der eingefügten Leitweginformation, Einfügen von Weiterleitungsinformation korrespondierend zu dem Stellvertreterknoten in der Weiterleitungstabelle (217), wenn der Ursprungsbereich der Leitweginformation ein virtueller Bereich ist, und Einfügen von Weiterleitungsinformation korrespondierend zu dem Einfügeknoten in der Weiterleitungstabelle (217), wenn der Ursprungsbereich der Leitweginformation ein lokaler Bereich ist.

2. Verfahren nach Anspruch 1, aufweisend, nach Ausführen des Einfügens von Weiterleitungsinformation, wenn ein Stellvertreterknoten gefunden wird, der sich auf der Position des Einfügeknotens befindet, während eine Position detektiert wird, an welcher ein Einfügeknoten korrespondierend zu der neuen Leitweginformation in den Aggregationsbaum (218) einzufügen ist, Löschen der Weiterleitungsinformation korrespondierend zu dem Stellvertreterknoten aus der Weiterleitungstabelle (217).

3. Verfahren nach Anspruch 1, aufweisend:

   nach Ausführen des Einfügens von Weiterleitungsinformation, wenn ein Stellvertreterknoten gefunden wird, der sich auf der Position des Einfügeknotens befindet, während eine Position detektiert wird, an welcher ein Einfügeknoten korrespondierend zu der neuen Leitweginformation in den Aggregationsbaum (218) einzufügen ist, und wenn ein linker/rechter Teilbaum des Stellvertreterknotens vorhanden ist,
Wiedereinfügen von Knoten des linken/rechten Teilbaums, und
Löschen von Weiterleitungsinformation korrespondierend zu dem Stellvertreterknoten aus der Weiterleitungstabelle (217).

4. Verfahren nach Anspruch 1, die folgenden Schritte aufweisend:

wenn sich herausstellt, dass sich der Vorgängerknoten des Einfügeknotens auf oder unter dem maximalen Aggregationsniveau befindet, während die Anwesenheit oder Abwesenheit des Vorgängerknotens bestimmt wird, Suchen nach einem Nachfolgeknoten des Einfiigeknotens;
wenn sich herausstellt, dass ein Nachfolgeknoten des Einfügeknotens vorhanden ist, Rücksetzen des Aggregationsniveaus gemäß einer Differenz zwischen den Präfixen der Weiterleitungsinformation korrespondierend zu dem Einfügeknoten und dem Nachfolgeknoten, und, wenn sich herausstellt, dass keine Nachfolgeknoten des Einfügeknotens vorhanden sind, Rücksetzen des Aggregationsniveaus gemäß dem Aggregationsniveau des Vorgängerknotens des Einfügeknotens;
Einfügen der Weiterleitungsinformation korrespondierend zu dem Einfügeknoten in der Weiterleitungstabelle (217), wenn das zurückgesetzte Aggregationsniveau null ist;
Einfügen des Stellvertreterknotens stellvertretend für den Einfügeknoten in der Weiterleitungstabelle (217), wenn das zurückgesetzte Aggregationsniveau größer als null ist; und
Bestimmen des Ursprungsbereichs der eingefügten Leitweginformation, Einfügen der Weiterleitungsinformation korrespondierend zu dem Stellvertreterknoten in der Weiterleitungstabelle (217), wenn der Ursprungsbereich ein virtueller Bereich ist, und Einfügen der Weiterleitungsinformation korrespondierend zu dem Einfügeknoten in der Weiterleitungstabelle (217), wenn der Ursprungsbereich ein lokaler Bereich ist.

5. Verfahren nach Anspruch 1, aufweisend ein Durchführen der Schritte von Rücksetzen des Aggregationsniveaus auf ein zurückgesetztes Aggregationsniveau, das nicht größer als das maximale Aggregationsniveau in einer Abwesenheit des Vorgängerknotens ist, und Einfügen eines Stellvertreterknotens stellvertretend für den Einfügeknoten auf dem zurückgesetzten Aggregationsniveau, durch:

Setzen eines Suchniveaubereichs zum Bestimmen, ob der Vorgängerknoten des Einfügeknotens innerhalb des Suchniveaubereichs vorhanden ist;
wenn der Vorgängerknoten des Einfügeknotens innerhalb des Suchniveaubereichs vorhanden ist, Bestimmen, ob ein Vorgängerknoten des Stellvertreterknotens stellvertretend für den Einfügeknoten auf dem maximalen Aggregationsniveaubereichs vorhanden ist;
Zurücksetzen des Aggregationsniveaus gemäß einer Differenz zwischen den Präfixen des Einfügeknotens und des Nachfolgeknotens des Stellvertreterknotens, wenn der Nachfolgeknoten des Stellvertreterknotens auf dem maximalen Aggregationsniveaubereich vorhanden ist; und
Einfügen des Stellvertreterknotens des Einfügeknotens auf dem zurückgesetzten Aggregationsniveau.

6. Verfahren zur Verwaltung von Weiterleitungsinformation, aufweisend die Schritte:

wenn Leitweginformation aus einer Leitwegtabelle (216) gelöscht wird, Detektieren eines Löschknotens korrespondierend zu der gelöschten Leitweginformation in einem Aggregationsbaum (218);
wenn Weiterleitungsinformation korrespondierend zu dem Löschknoten in einer Weiterleitungstabelle (217) vorhanden ist, Suchen nach einem Nachfolgeknoten des Löschknotens auf einem vorbestimmten maximalen Aggregationsniveaubereich; und
wenn ein Nachfolgeknoten für den Löschknoten auf einem Aggregationsniveau, das nicht größer als ein vorbestimmtes maximales Aggregationsniveau ist, vorhanden ist, Wechseln des Nachfolgeknotens als ein neuer Ursprungsknoten eines Stellvertreterknotens, und, wenn keine Nachfolgeknoten für den Löschknoten auf einem Aggregationsniveau vorhanden sind, das nicht größer als ein vorbestimmtes maximales Aggregationsniveau ist, Löschen von Weiterleitungsinformation korrespondierend zu dem Löschknoten aus der Weiterleitungstabelle (217).

7. Verfahren nach Anspruch 6, aufweisend den Schritt, wenn der Löschknoten ein Ursprungsknoten ist, der einen Stellvertreterknoten kreiert hat, das Wechseln der Weiterleitungsinformation korrespondierend zu dem Löschknoten durch Weiterleitungsinformation korrespondierend zu dem Stellvertreterknoten.

**8.** Verteilte Routerarchitektur, aufweisend:

ein Schaltemodul (250), das eine Vielzahl von Leitwegprotokollen (251, 252, 253, 254) beherbergt, während eines Verwaltens von Weiterleitungsinformation innerhalb der verteilten Routerarchitektur; und

eine Vielzahl von Leitwegknoten (210, 220, 230, 240), von denen jeder innerhalb von korrespondierenden Ursprungsbereichen zu Dienstnetzwerke angeordnet ist, die lokale Bereiche aufweisen, wobei die Vielzahl von Leitwegknoten (210, 220, 230, 240) über das Schaltemodul (250) verbunden sind, um einen Ursprungsbereich, der einen virtuellen Bereich aufweist, zu bilden und in Echtzeit gesammelte Leitweginformation, die durch eine Leitwegtabelle (216) zusammengestellt ist, und einen Aggregationsbaum (218), der von der Leitwegtabelle (216) abgeleitet wurde, gemeinsam zu benutzen,

wobei jeder Leitwegknoten (210, 220, 230, 240) eingerichtet ist, um auf ein Einfügen von neuer Leitweginformation in der Leitwegtabelle (216) zu antworten, durch

Eingerichtetsein, um in dem Aggregationsbaum (218) eine Position zum Hinzufügen eines Einfügeknotens korrespondierend zu der neuen Leitweginformation zu identifizieren;

Eingerichtetsein, eine Suche nach dem Aggregationsbaum (218) innerhalb eines maximalen Aggregationsniveaus durchzuführen, um einen Vorgängerknoten des Einfügeknotens zu identifizieren;

Eingerichtetsein zum Verzichten auf ein Aktualisieren der Weiterleitungstabelle (217) mit Weiterleitungsinformation korrespondierend zu dem Einfügeknoten, wenn der Einfügeknoten und der Vorgängerknoten in demselben Ursprungsbereich erzeugt wurden und die Suche den Vorgängerknoten identifiziert;

Eingerichtetsein zum Zurücksetzen des maximalen Aggregationsniveaus auf ein zurückgesetztes Aggregationsniveau, das nicht kleiner als das maximale Aggregationsniveau ist, wenn die Suche den Vorgängerknoten zu identifizieren misslingt, und Eingerichtetsein zum Hinzufügen eines Stellvertreterknotens stellvertretend für den Einfügeknoten auf dem zurückgesetzten Aggregationsniveau;

Eingerichtetsein zum Ausführen einer Identifizierung des Ursprungsbereichs der neuen Leitweginformation;

Eingerichtetsein, um die Weiterleitungsinformation korrespondierend zu dem Stellvertreterknoten einzufügen, wenn die Identifizierung besagt, dass der Ursprungsbereich der neuen Leitweginformation ein virtueller Bereich ist; und

Eingerichtetsein, um die Weiterleitungsinformation korrespondierend zu dem Einfügeknoten einzufügen, wenn die Identifizierung besagt, dass der Ursprungsbereich der neuen Leitweginformation ein lokaler Bereich ist.

**Revendications**

**1.** Procédé de gestion d'une information d'acheminement, comprenant les étapes qui consistent :

(1) lorsqu'une nouvelle information de routage est insérée dans une table de routage (216) dans un routeur distribué (100) dans lequel tous les noeuds de routage (210, 220, 230, 240) se partagent une information d'acheminement formée conformément à un arbre d'agrégation (218) basé sur la table de routage (216), à détecter une position dans laquelle un noeud d'insertion correspondant à la nouvelle information de routage doit être inséré dans l'arbre d'agrégation (218) ;
(2) à déterminer la présence et l'absence d'un noeud d'ancêtre du noeuds d'insertion à ou en dessous d'un niveau d'agrégation maximal prédéterminé ;
(3) à laisser une table d'acheminement (217) non mise à jour avec une information concernant le noeud d'insertion en présence du noeuds d'ancêtre, lorsqu'une information d'acheminement se trouve dans la table d'acheminement (217) et que le noeud d'insertion et le noeud d'ancêtre ont été générés à partir d'une zone de source commune ;
(4) en l'absence du noeud d'ancêtre, à restaurer le niveau d'agrégation à un niveau d'agrégation restauré non supérieur au niveau d'agrégation maximal, et à insérer un noeud de délégation représentatif du noeud d'insertion au niveau d'agrégation restauré ; et
(5) à réaliser une insertion d'une information d'acheminement en déterminant la zone de source de l'information de routage insérée, à insérer une information d'acheminement correspondant au noeud de délégation dans la table d'acheminement (217) lorsque la zone de source de l'information de routage est une zone virtuelle, et à insérer une information d'acheminement correspondant au noeud d'insertion dans la table d'acheminement (107) lorsque la zone de source de l'information de routage est une zone locale.

**2.** Procédé selon la revendication 1, comprenant, après la réalisation de ladite insertion d'une information d'acheminement lorsqu'il est trouvé qu'un noeud de délégation existe dans la position du noeud d'insertion tout en détectant une position dans laquelle un noeud d'insertion correspondant à la nouvelle information de routage doit être inséré dans l'arbre d'agrégation (218), la suppression, de la table d'acheminement (217), d'une information d'acheminement correspondant au noeud de délégation.

3. Procédé selon la revendication 1, comprenant :

après la réalisation de ladite insertion d'une information d'acheminement lorsqu'il est trouvé qu'un noeud de délégation existe dans la position du noeud d'insertion tout en détectant une position dans laquelle un noeud d'insertion correspondant à la nouvelle information de routage doit être inséré dans l'arbre d'agrégation (218), et lorsqu'un sous-arbre gauche/droit du noeud de délégation existe,
la réinsertion de noeuds du sous-arbre gauche/droit, et
la suppression, de la table d'acheminement (217), de l'information d'acheminement correspondant au noeud de délégation.

4. Procédé selon la revendication 1, comprenant les étapes de :

lorsqu'il est trouvé que le noeud d'ancêtre du noeud d'insertion existe à ou en dessous du niveau d'agrégation maximal tout en déterminant ladite présence et absence du noeud d'ancêtre, recherche d'un noeud descendant du noeud d'insertion ;
lorsqu'il est trouvé qu'un noeud descendant du noeud d'insertion existe, restauration du niveau d'agrégation conformément à une différence entre les préfixes de l'information d'acheminement correspondant au noeud d'insertion et au noeud descendant, et lorsqu'il est trouvé qu'aucun noeud descendant du noeud d'insertion n'existe, restauration du niveau d'agrégation conformément au niveau d'agrégation du noeud d'ancêtre du noeud d'insertion ;
insertion de l'information d'acheminement correspondant au noeud d'insertion dans la table d'acheminement (217) lorsque le niveau d'agrégation restauré est zéro ;
insertion du noeud de délégation représentatif du noeud d'insertion dans la table d'acheminement (217) lorsque le niveau d'agrégation restauré est supérieur à zéro ; et
détermination de la zone de source de l'information de routage insérée, insertion de l'information d'acheminement correspondant au noeud de délégation dans la table d'acheminement (217) lorsque la zone de source est une zone virtuelle, et insertion de l'information d'acheminement correspondant au noeud d'insertion dans la table d'acheminement (217) lorsque la zone de source est une zone locale.

5. Procédé selon la revendication 1, comprenant l'exécution desdites étapes de restauration du niveau d'agrégation à un niveau d'agrégation restauré non supérieur au niveau d'agrégation maximal en absence du noeud d'ancêtre, et d'insertion d'un noeud de délégation représentatif du noeud d'insertion au niveau d'agrégation restauré, en :

instaurant une plage de niveau de recherche pour déterminer si le noeud d'ancêtre du noeud d'insertion existe dans la plage de niveau de recherche ;
lorsque le noeud d'ancêtre du noeud d'insertion existe dans la plage de niveau de recherche, déterminant si un noeud descendant du noeud de délégation représentatif du noeud d'insertion existe dans la plage de niveau d'agrégation maximal ;
restaurant le niveau d'agrégation conformément à une différence entre les préfixes du noeud d'insertion et du noeud descendant du noeud de délégation lorsque le noeud descendant du noeud de délégation existe dans la plage de niveau d'agrégation maximal ; et
insérant le noeud de délégation du noeud d'insertion au niveau d'agrégation restauré.

6. Procédé de gestion d'une information d'acheminement, comprenant les étapes qui consistent :

lorsqu'une information de routage est supprimée d'une table de routage (215), à détecter un noeud de suppression correspondant à l'information de routage supprimée dans un arbre d'agrégation (218) ;
lorsqu'une information d'acheminement correspondant au noeud de suppression se trouve dans une table d'acheminement (217), à rechercher un noeud descendant du noeud de suppression dans une plage prédéterminée de niveau d'agrégation maximal ; et
lorsqu'un noeud descendant existe pour le noeud de suppression à un niveau d'agrégation non supérieur à un niveau d'agrégation maximal prédéterminé, à changer le noeud descendant en tant que nouveau noeud de source d'un noeud de délégation, et lorsqu'aucun noeud descendant n'existe pour le noeud de suppression à un niveau d'agrégation non supérieur à un niveau d'agrégation maximal prédéterminé, à supprimer, de la table d'acheminement (217), une information d'acheminement correspondant au noeud de suppression.

**7.** Procédé selon la revendication 6, comprenant l'étape qui consiste, lorsque le noeud de suppression est un noeud de source qui a créé un noeud de délégation, à changer une information d'acheminement correspondant au noeud de suppression en une information d'acheminement correspondant au noeud de délégation.

**8.** Routeur à architecture distribuée, comportant :

un module de commutation (250) logeant de multiples protocoles de routage (251, 252, 253, 254) tout en gérant une information d'acheminement dans le routeur à architecture distribuée ; et
de multiples noeuds de routage (210, 220, 230, 240) disposé chacun de façon à desservir des réseaux dans des zones de source correspondantes constituées de zones locales, lesdits multiples noeuds de routage (210, 220, 230, 240) étant connectés par l'intermédiaire dudit module de commutation (250) pour former une zone de source comprenant une zone virtuelle et pour partager en temps réel une information de routage collectée assemblée par une table de routage (216) et un arbre d'agrégation (218) dérivé de ladite table de routage (216) ;
dans lequel chaque noeud de routage (210, 220, 230, 240) est disposé de façon à répondre à une insertion d'une nouvelle information de routage dans ladite table de routage (216) en
étant disposé pour identifier dans ledit arbre d'agrégation (218) une position pour l'addition d'un noeud d'insertion correspondant à ladite nouvelle information de routage ;
étant disposé pour réaliser une recherche dudit arbre d'agrégation (218) en-deçà d'un niveau d'agrégation maximal pour identifier un noeud d'ancêtre dudit noeud d'insertion ;
étant disposé pour relancer la mise à jour de ladite table d'acheminement (217) avec une information d'acheminement correspondant audit noeud d'insertion lorsque ledit noeud d'insertion et ledit noeud d'ancêtre ont été générés à ladite même zone de source et lorsque ladite recherche identifie ledit noeud d'ancêtre ;
étant disposé pour restaurer ledit niveau d'agrégation maximal à un niveau d'agrégation restauré non inférieur audit niveau d'agrégation maximal lorsque ladite recherche ne parvient pas à identifier ledit noeud d'ancêtre et en étant disposé pour additionner un noeud de délégation représentatif dudit noeud d'insertion audit niveau d'agrégation restauré ;
étant disposé pour réaliser une identification de ladite zone de source de ladite nouvelle information de routage ;
étant disposé pour insérer ladite information d'acheminement correspondant audit noeud de délégation lorsque ladite identification établit que ladite zone de source de ladite nouvelle information de routage est une zone virtuelle ; et
étant disposé pour insérer ladite information d'acheminement correspondant audit noeud d'insertion lorsque ladite identification établit que ladite zone de source de ladite nouvelle information de routage est une zone locale.

FIG.1

FIG.2

FIG.3

| PREFIX | LENGTH | AGGREGATION_ LEVEL | INDEX | TYPE | SOURCE IOP | FT FLAG | PARENT | L_SUBTREE | R_SUBTREE |
|--------|--------|--------------------|-------|------|-----------|---------|--------|-----------|-----------|

FIG.4A

FIG.4B

FIG.4C

START

NEW
ROUTING INFORMATION IN
ROUTING TABLE? — 1100 — NO

YES

DETECT POSITION OF
INSERTION NODE — 1200

DELEGATION
NODE AT POSITION OF
INSERTION NODE? — 1300 — NO

YES

LEFT/RIGHT
SUBTREE OF DELEGATION
NODE? — 1400 — NO

YES — 1500

REINSERT NODES OF
LEFT/RIGHT SUBTREE

DELETE FORWARDING INFORMATION
OF DELEGATION NODE — 1700

DELETE FORWARDING INFORMATION
OF DELEGATION NODE — 1600

INSERT — 2000

END

FIG.5

2000 — ( INSERT )

2001 — SEARCH FOR ANCESTOR NODE OF INSERTION NODE WITHIN A RANGE OF DEFAULT LEVEL

2003 — ANCESTOR NODE DETECTED? — YES → (A)

NO

2005 — SET SEARCH LEVEL RANGE

2007 — ANCESTOR NODE DETECTED WITHIN SEARCH LEVEL RANGE? — NO

YES

2009 — SEARCH FOR DESCENDANT NODE OF DELEGATION NODE WITHIN A RANGE OF DEFAULT LEVEL

2110 — DESCENDANT NODE DETECTED? — NO

YES

2130 — RESET AGGREGATION LEVEL (DYNAMIC LEVEL)

2170 — INSERT DELEGATION NODE AT DEFAULT LEVEL

2150 — INSERT DELEGATION NODE AT DYNAMIC LEVEL

2190 — SOURCE AREA OF INSERTED ROUTING INFORMATION? — LOCAL AREA

2230 — INSERT FORWARDING INFORMATION FOR INSERTION NODE IN FORWARDING TABLE

VIRTUAL AREA

2210 — INSERT FORWARDING INFORMATION FOR DELEGATION NODE IN FORWARDING TABLE

( RETURN )

FIG.6A

FIG.6B

SELECT DELEGATION LEVEL — 2300

SEARCH FOR DESCENDANT
NODE OF INSERTION NODE — 2310

2320
DESCENDANT
NODE DETECTED? — NO

YES — 2330

RESET AGGREGATION LEVEL
(DYNAMIC LEVEL)

2340
RESET AGGREGATION LEVEL
TO LEVEL OF ANCESTOR
NODE OF INSERTION NODE

2350
ANCESTOR NODE
OF INSERTION NODE IN FORWARDING
TABLE? — NO

YES

2360
SAME SOURCE
IOP FOR INSERTION NODE AND
ANCESTOR NODE? — NO

YES — 2370

DYNAMIC LEVEL −1

RETURN

FIG.6C

START

ROUTING
INFORMATION DELETED IN
FORWARDING
TABLE? 5100

NO

YES

LOCATE DELETION NODE
CORRESPONDING TO DELETED
ROUTING INFORMATION 5200

DELETION
NODE AS SOURCE NODE
OF DELEGATION
NODE? 5300

NO

YES

SUBSTITUTE FORWARDING
INFORMATION CORRESPONDING TO
DELETION NODE FOR FORWARDING
INFORMATION FOR DELEGATION NODE 5400

FORWARDING
INFORMATION CORRESPONDING TO
DELETION NODE IN FORWARDING
TABLE? 5500

NO

YES

SEARCH FOR DESCENDANT
NODE OF DELETION NODE WITHIN
A RANGE OF DEFAULT LEVEL 5600

DESCENDANT
NODE DETECTED? 5700

NO

YES

SET DESCENDANT NODE
AS NEW SOURCE NODE OF
DELEGATION NODE 5800

DELETE FORWARDING
INFORMATION CORRESPONDING
TO DELETION NODE FROM
FORWARDING TABLE 5900

END

FIG.7

28

```
Insertion (prefix) {
  local insertionnode, ancestornode, result
  /* STEP 1 */
  insertionnode := FindNode (prefix)
  /* STEP 2 */
  /* Virtual node exist in the aggregation tree */
  if (insertionnode ≠ NIL) then
     result := LeftSubTree (insertionnode)
     if (result ≠ NIL) then
      Insertion(result)
     result := RightSubTree (insertionnode)
     if (result ≠ NIL) then
       Insertion(result)
     DeleteNodeFromFT (insertionnode)
  /* STEP 3 */
  /* FindAncestorNode searches ancestor node */
  ancestornode := FindAncestorNode (insertionnode, defaultlevel)
  if (ancestornode ≠ NIL) then
     InsertWithAncestorNode (insertionnode, ancestornode)
  else
     InsertWithoutAncestorNode (insertionnode)
  }
```

## FIG.8A

```
FindNode (prefix) {
  local node
  /* Search for node to be inserted */
  node := GetNode (prefix)
  /* Identity the insertion node */
  if (node ? NIL) then
       return (node)
  else
       return NIL
}
```

## FIG.8B

```
InsertWithoutAncestorNode (insertionnode) {
 local ancestornode, newdelegationnode, searchlevel,
      descendantnode, dynamiclevel
 /* Lemma 2-2 */
 searchlevel := defaultlevel*2 - 1
 ancestornode := FindAncestorNode (insertionnode, searchlevel)
  if (ancestornode = NIL) then
    dynamiclevel := defaultlevel
  else /* FindDescendantNode finds node not written to FT */
    descendantnode := FindDescendantNode (insertionnode, defaultlevel)
    /* Get adaptive level */
       if (descendantnode ? NIL) then
          dynamiclevel := GetNodePrefixLength (insertionnode)
             - GetDistPrefixLength (insertionnode, descendantnode)
       else
          dynamiclevel := defaultlevel
  newdelegationnode : = MakeDelegationNode (insertionnode, dynamiclevle)
  if (NodeNexthopVirtual (insertionnode) = TRUE) then
    InsertNodeToFT (newdelegationnode)
  else /* All inter-domain node must be inserted into FT */
    InsertNodeToFT (insertionnode)
}
```

## FIG.8C

```
MakeDelegationNode (node, level) {
 local delegationnode
 /* Make a virtual delegation node and set node type */
   delegationnode := AllocateDelegationNode (node, level)
   SetNodeType (delegationnode) := DELEGATION
   SetDelegationNodeIndex (delegationnode, node)
   return (delegationnode)
}
```

## FIG.8D

```
InsertWithAncestorNode (insertionnode, ancestornode) {
  local newdelegationnode, result, dynamiclevel
  dynamiclevel := SelectDelegationLevel (insertionnode, ancestornode)
   if (dynamiclevel > 0) then
        newdelegationnode := MakeDelegationNode (insertionnode, dynamiclevel);
   /* Resolve destination area */
        if (NodeNexthopVirtual (insertionnode) = TRUE) then
          InsertNodeToFT   (newdelegationnode)
        else
          InsertNodeToFT   (insertionnode)
   elseif (dynamiclevel = 0) then
     InsertNodeToFT   (insertionnode)
   else /* Check aggregatability of route */
     if (NodeNexthopVirtual   (insertionnode) = FALSE) then
          InsertNodeToFT   (insertionnode)

}
```

# FIG.8E

```
SelectDelegationLevel (insertionnode, ancestornode) {
  local dynamiclevel, result, searchnode, descendantnode
  descendantnode := FindDescendantNode (insertionnode, GetNodeLevel (ancestornode))
  /* Get adaptive level */
  if (descendantnode ≠ NIL) then
          dynamiclevel := GetNodePrefixLength (insertionnode)
                        - GetDistPrefixLength (insertionnode, descendantnode)
  else
    dynamiclevel := GetNodesLevel (insertionnode, ancestornode)
  /* Aggregatable case */
  if (CheckNodeUpdateToFT(ancestornode) = TRUE
    && NodeSource(insertionnode) = NodeSource(ancestornode)) then
        dynamiclevel := -1


  return dynamiclevel

}
```

# FIG.8F

```
Deletion (prefix) {
 local deletionnode, delegationnode,
       result, descendantnode
 /* STEP1 */
 deletionnode := FindNode (prefix)
 /* STEP2 */
 If (CheckNodeAggregate (deletionnode) = TRUE)
    then
    deletionnode := GetDelegationNode (deletionnode)
 If (CheckNodeUpdateToFT (deletionnode) = TRUE)
    then
    descendantnode := FindDescendantNode
                        (deletionnode, defaultlevel)
    /* Suppress deletion from FT */
    if (descendantnode ? NIL) then
    SetDelegationNode (deletionnode,
        descendantnode)
    else
       DeleteNodeFromFT (deletionnode)
 }
```

# FIG.8G

210

220

Aggregation tree

| Prefix | Source IOP | FE | index | level |
|--------|-----------|-----|-------|-------|
| 3○ | 1 | ▨ | | 2 |
| 0○ | 1 | | 00 | 2 |
| | | | | |
| | | | | |
| | | | | |
| | | | | |
| | | | | |

Aggregation tree

| Prefix | Source IOP | FE | index | level |
|--------|-----------|-----|-------|-------|
| 3○ | 1 | | | 2 |
| 0○ | 1 | ▨ | 00 | 2 |
| | | | | |
| | | | | |
| | | | | |
| | | | | |
| | | | | |

Forwarding table

| Prefix | Source IOP |
|--------|-----------|
| 3○ | |
| | |
| | |
| | |
| | |
| | |
| | |

IOP #1

Forwarding table

| Prefix | Source IOP |
|--------|-----------|
| 1○ | 1 |
| | |
| | |
| | |
| | |
| | |
| | |

IOP #2

FIG.9A

33

210

220

**Aggregation tree**

| Prefix | Source IOP | FE | index | level |
|--------|-----------|-----|-------|-------|
| 3○ | 1 | ▨ | | 2 |
| 0○ | 1 | | 00 | 2 |
| 7○ | 2 | | | 1 |
| 4○ | 2 | ▨ | 0 | 1 |
| | | | | |
| | | | | |
| | | | | |

**Aggregation tree**

| Prefix | Source IOP | FE | index | level |
|--------|-----------|-----|-------|-------|
| 3○ | 1 | | | 2 |
| 0○ | 1 | ▨ | 00 | 2 |
| 7○ | 2 | ▨ | | 1 |
| 4○ | 2 | | 0 | 1 |
| | | | | |
| | | | | |
| | | | | |

**Forwarding table**

| Prefix | Source IOP |
|--------|-----------|
| 3○ | |
| 4○ | 2 |
| | |
| | |
| | |
| | |
| | |
| | |

**Forwarding table**

| Prefix | Source IOP |
|--------|-----------|
| 1○ | 1 |
| 7○ | |
| | |
| | |
| | |
| | |
| | |
| | |

IOP #1

IOP #2

# FIG.9B

34

FIG.10A

210

### Aggregation tree

| Prefix | Source IOP | FE | index | level |
|--------|-----------|-----|-------|-------|
|        |           |     |       |       |
| 0O     | 1         |     | 01    | 2     |
| 4O     | 1         | ▨   |       | 2     |
| 5O     | 1         | ▨   |       |       |
| 6O     | 1         | ▨   |       |       |
|        |           |     |       |       |
|        |           |     |       |       |

### Forwarding table

| Prefix | Source IOP |
|--------|-----------|
|        |           |
| 4O     |           |
| 5O     |           |
| 6O     |           |
|        |           |
|        |           |
|        |           |

IOP #1

220

### Aggregation tree

| Prefix | Source IOP | FE | index | level |
|--------|-----------|-----|-------|-------|
|        |           |     |       |       |
| 0O     | 1         | ▨   | 01    | 2     |
| 4O     | 1         |     |       | 2     |
| 5O     | 1         |     |       |       |
| 6O     | 1         |     |       |       |
|        |           |     |       |       |
|        |           |     |       |       |

### Forwarding table

| Prefix | Source IOP |
|--------|-----------|
| 0O     | 1         |
|        |           |
|        |           |
|        |           |
|        |           |
|        |           |
|        |           |

IOP #2

# FIG.10B

| Default level | Number of the entries | Number of the difference | Reduction rate |
|---|---|---|---|
| 1 | 39,802 | 58 | 26% |
| 2 | 30,574 | 104 | 43% |
| 3 | 25,231 | 87 | 53% |
| 4 | 20,491 | 118 | 62% |
| 5 | 16,478 | 82 | 69% |
| 6 | 12,554 | 61 | 77% |
| Original | 53,632 | 0 | 0% |

# FIG.11A

# FIG.11B

FIG.11C

FIG.11D

**EP 1 443 721 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0696630 A
- US 6078963 A
- US 6212184 B
- KR 20020075701
- US 10724085 B